# EUROPÄISCHE PATENTANMELDUNG

(11) **EP 4 813 753 A1**
(43) Veröffentlichungstag der Anmeldung: **30.09.2026**
(21) Anmeldenummer: 26164735.8
(22) Anmeldetag: 13.03.2026
(51) Int. Cl.: B60R 9/045, B60R 9/055

(54) **DACHTRANSPORTEINHEIT UND AUFSTELLMECHANISMUS FÜR EINE DACHTRANSPORTEINHEIT**

(30) Priorität: 18.03.2025 DE 102025110454
(71) Anmelder: Compartment Engineering Freital GmbH, 01257 Dresden (DE)
(72) Erfinder: König, Maik, 01257 Dresden (DE); Gramsch, Steffen, 01257 Dresden (DE)
(74) Vertreter: Dr. Solf & Zapf Patent- und Rechtsanwalts PartG mbB

(57) **Zusammenfassung**

Die vorliegende Erfindung betrifft eine Dachtransporteinheit (1) für ein Fahrzeug. Die Dachtransporteinheit (1) weist mindestens ein Basiselement (2), mindestens ein Deckelelement (3), und mindestens einen Aufstellmechanismus (4) auf. Das Deckelelement (3) ist in Höhenrichtung (H) oberhalb des Basiselements (2) angeordnet und das Deckelelement (3) und das Basiselement (2) sind über den Aufstellmechanismus (4) miteinander verbunden. Der Aufstellmechanismus (4) ist zumindest zwischen einer zusammengelegten Position und einer aufgestellten Position bewegbar, wobei der Aufstellmechanismus (4) das Basiselement (2) und das Deckelelement (3) in der Höhenrichtung (H) relativ zueinander bewegt, so dass das Deckelelement (3) in der aufgestellten Position des Aufstellmechanismus (4) in der Höhenrichtung (H) weiter von dem Basiselement (2) entfernt ist als in der zusammengelegten Position. Erfindungsgemäß bewegt der Aufstellmechanismus (4) das Deckelelement (3) bei einer Bewegung zwischen zusammengelegter Position und aufgestellter Position auch in einer zur Höhenrichtung (H) orthogonalen Längsrichtung (L) relativ zum Basiselement (2). Ferner betrifft die Erfindung einen Aufstellmechanismus (4) für eine Dachtransporteinheit (1).

## Beschreibung

Die Erfindung betrifft eine Dachtransporteinheit für ein Fahrzeug. Die Dachtransporteinheit weist mindestens ein Basiselement, mindestens ein Deckelelement und mindestens einen Aufstellmechanismus auf. Das Basiselement ist zumindest mittelbar, beispielsweise mit einer Lastenträgerplatte, an einem Fahrzeug anbringbar. Das Deckelelement ist in einer Höhenrichtung oberhalb des Basiselements angeordnet. Das Deckelelement und das Basiselement sind über den Aufstellmechanismus miteinander verbunden. Der Aufstellmechanismus ist zumindest zwischen einer zusammengelegten Position und einer aufgestellten Position bewegbar, wobei der Aufstellmechanismus das Basiselement und das Deckelelement in der Höhenrichtung relativ zueinander bewegt, so dass das Deckelelement in der aufgestellten Position des Aufstellmechanismus in der Höhenrichtung weiter von dem Basiselement entfernt ist als in der zusammengelegten Position. Ferner betrifft die Erfindung einen Aufstellmechanismus für eine Dachtransporteinheit.

Aus dem Stand der Technik sind starre Dachtransporteinheiten wie Dachboxen bekannt. Derartige Dachtransporteinheiten können nicht daran angepasst werden, ob sie für Transportzwecke benötigt werden oder ob sie leer sind. Mit der starren Form einher gehen ein erhöhter Luftwiderstand und ein steigender Kraftstoffverbrauch.

Aus EP 2 008 849 B1 ist ein Fahrzeug bekannt, dessen Dach zweiteilig ausgeführt ist. Das Dach weist ein Basisdach und ein in Höhenrichtung relativ zu dem Basisdach bewegbares Dachsegment auf. Durch das bewegliche Dachelement kann bei Bedarf zusätzlicher Stauraum geschaffen werden. Allerdings weist diese Lösung den Nachteil auf, dass die Dachtransporteinheit fest mit der Fahrzeugkarosserie verbunden ist. Die Installation der Dachtransporteinheit an dem Fahrzeug ist also mit entsprechendem Aufwand verbunden.

Der Erfindung liegt daher die Aufgabe zugrunde, eine Dachtransporteinheit für ein Fahrzeug bereitzustellen, die leicht zu installieren und zu betätigen ist sowie einen verbesserten Luftwiderstand aufweist.

Die Aufgabe wird erfindungsgemäß durch die Merkmale des kennzeichnenden Teils des Anspruchs 1 gelöst, nämlich dadurch, dass der Aufstellmechanismus das Deckelelement bei einer Bewegung zwischen zusammengelegter Position und aufgestellter Position auch in einer zu der Höhenrichtung orthogonalen Längsrichtung relativ zu dem Basiselement bewegt.

Die Dachtransporteinheit ist zur Montage an einem Fahrzeug ausgebildet. Das Basiselement ist zumindest mittelbar an einem Fahrzeug anbringbar. "Anbringbar" im Kontext der vorliegenden Offenbarung bedeutet, dass die Dachtransporteinheit mit dem Basiselement an einem Fahrzeug zum Zweck des Transports von Transportgut montierbar und auch wieder von diesem lösbar ist. Beispielsweise ist das Basiselement unmittelbar an einem Dach eines Fahrzeugs oder an einer Dachreling eines Fahrzeugs befestigbar. Bevorzugt ist vorgesehen, dass das Basiselement mit einem Lastenträgersystem an einem Fahrzeug befestigbar ist. Das Lastenträgersystem weist beispielsweise mindestens eine Lastenträgerplatte auf, die an dem Fahrzeug oder einer Dachreling des Fahrzeugs befestigbar ist. Das Basiselement ist vorteilhaft an der Lastenträgerplatte befestigbar. Vorzugsweise ist das Fahrzeug ein Kraftfahrzeug, beispielsweise ein Personenkraftfahrzeug.

Zweckmäßig ist es, wenn insbesondere vorgesehen ist, dass das Basiselement in Längsrichtung zumindest abschnittsweise abgeschrägt oder gekrümmt ausgebildet ist, insbesondere entgegen der Höhenrichtung hervorstehend gekrümmt ausgebildet ist. Ein gekrümmter Abschnitt des Basiselements ist vorzugsweise an dem vorderen Abschnitt des Basiselements angeordnet. Dadurch kann sich die Basiseinheit an die Kontur eines Fahrzeugs oder die entsprechende Kontur eines Lastenträgersystems anlegen.

Die Dachtransporteinheit weist in Draufsicht insbesondere eine im Wesentlichen rechteckige Form auf. Vorzugsweise ist die äußere Form der Dachtransporteinheit in Draufsicht in der aufgestellten Position im Wesentlichen gleich der äußeren Form der Dachtransporteinheit in der zusammengelegten Position. Vorteilhaft ist vorgesehen, dass mindestens eine Ecke, vorzugsweise alle Ecken, der Dachtransporteinheit abgerundet ausgebildet ist/sind.

Die Dachtransporteinheit erstreckt sich in Längsrichtung von einem Heckabschnitt zu einem vorderen Abschnitt. Wenn die Dachtransporteinheit auf einem Fahrzeug angebracht ist, fällt die Längsrichtung insbesondere mit einer Längsrichtung des Fahrzeugs, beispielsweise zwischen einem Fahrzeugheck und einer Fahrzeugfront, zusammen. Ferner ist der Heckabschnitt der Dachtransporteinheit in dem üblichen Montagezustand der Dachtransporteinheit an einem Fahrzeug näher an einem Heck des Fahrzeugs angeordnet als an einer Front.

Das Basiselement ist in Höhenrichtung unter dem Deckelelement angeordnet. Die Höhenrichtung erstreckt sich ausgehend von dem Basiselement in Richtung des Deckelelements. Es ist insbesondere vorgesehen, dass sich das Deckelelement in der aufgestellten Position und/oder in der zusammengelegten Position zumindest abschnittsweise parallel zu dem Basiselement erstreckt. Ferner ist es insbesondere vorgesehen, dass das Deckelelement die Dachtransporteinheit in Höhenrichtung abschließt. Es ist insbesondere vorgesehen, dass das Deckelelement in der Seitenansicht eine zumindest abschnittsweise gekrümmte Kontur aufweist. Bevorzugt weist der vordere Abschnitt des Deckelelements eine gekrümmte Kontur auf.

Das Deckelelement und das Basiselement sind über mindestens einen Aufstellmechanismus miteinander verbunden. Vorzugsweise weist der Aufstellmechanismus mindestens zwei Aufstellmodule auf. Beispielsweise ist je ein Aufstellmodul an einer Längsseite der Dachtransporteinheit, insbesondere des Basiselements, vorgesehen. Insbesondere ist vorgesehen, dass zwei einander gegenüberliegende Aufstellmodule symmetrisch zu einer Längsachse, vorzugsweise zu einer Längsmittelachse, der Dachtransporteinheit, insbesondere des Basiselements, positioniert sind. Wenn in der folgenden Beschreibung nur auf ein Aufstellmodul Bezug genommen wird, sollen die Ausführungen gleichermaßen für beide Aufstellmodule gelten.

Der Aufstellmechanismus ist derart ausgebildet, dass er das Basiselement und das Deckelelement relativ zueinander zwischen der aufgestellten Position und der zusammengelegten Position führt, insbesondere diese Bewegung begrenzt. Eine Bewegung zwischen der aufgestellten Position und der zusammengelegten Position umfasst eine vollständige Bewegung und einen Teilabschnitt der Bewegung aus der aufgestellten Position in die zusammengelegte Position sowie eine vollständige Bewegung oder einen Teilabschnitt der Bewegung aus der zusammengelegten Position in die aufgestellte Position. Vorzugsweise weist die Dachtransporteinheit eine maximale Höhenerstreckung in der aufgestellten Position und/oder eine minimale Höhenerstreckung in der zusammengelegten Position auf.

In der aufgestellten Position der Dachtransporteinheit weist ein Innenraum der Dachtransporteinheit ein maximales Volumen auf, in dem Transportgut, z. B. Ski oder Gepäck, transportiert werden kann. In der zusammengelegten Position weist der Innenraum ein minimales Volumen auf.

Insbesondere ist die Dachtransporteinheit dazu ausgebildet und eingerichtet, von einer geöffneten Position in eine geschlossene Position und von der geschlossenen Position in die geöffnete Position überführt zu werden. In der geöffneten Position ist ein Innenraum der Dachtransporteinheit, vorzugsweise seitlich, zugänglich, so dass die Dachtransporteinheit beladen werden kann. Beispielsweise ist vorgesehen, dass die Dachtransporteinheit entlang der Längsrichtung relativ zu einem Seitenabschnitt des Fahrzeugs, vorzugsweise des Lastenträgersystems, schwenkbar ist. In der geschlossenen Position ist der Innenraum von außen unzugänglich. Während des Transports ist der übliche Betriebszustand der Dachtransporteinheit die geschlossene Position. Alternativ oder zusätzlich ist insbesondere vorgesehen, dass die Dachtransporteinheit in der geöffneten Position angewinkelt zu dem Fahrzeug angeordnet ist. Insbesondere ist vorgesehen, dass die Dachtransporteinheit mittels eines Griffs in die geöffnete Position und/oder in die geschlossene Position überführbar ist.

Vorteilhaft ist vorgesehen, dass die Dachtransporteinheit nur in der aufgestellten Position in die geöffnete Position überführbar ist.

Zur Sicherung ist insbesondere vorgesehen, dass die Dachtransporteinheit einen Schließmechanismus aufweist. Vorzugsweise ist der Schließmechanismus an dem Basiselement angeordnet. Insbesondere ist vorgesehen, dass der Schließmechanismus in einem abgesperrten Zustand das Basiselement zerstörungsfrei unlösbar mit dem Deckelelement und/oder mit dem Lastenträgersystem verbindet. Ferner ist vorzugsweise vorgesehen, dass das Basiselement mindestens einen Griff aufweist. Vorzugsweise ist vorgesehen, dass der Griff an einer Außenseite des Basiselements angeordnet ist.

Insbesondere ist vorgesehen, dass die Dachtransporteinheit in der aufgestellten Position eine maximale Höhenerstreckung von höchstens 750 mm, vorzugsweise von höchstens 450 mm, bevorzugt von höchstens 420 mm, insbesondere gemessen von einer Unterkante des Basiselements bis zu einer Oberkante des Deckelelements, aufweist. Alternativ oder zusätzlich dazu ist insbesondere vorgesehen, dass die Dachtransporteinheit in der zusammengelegten Position eine maximale Höhenerstreckung von höchstens 300 mm, vorzugsweise von höchstens 250 mm, bevorzugt von höchstens 200 mm aufweist, insbesondere gemessen von einer Unterkante des Basiselements bis zu einer Oberkante des Deckelelements.

Erfindungsgemäß ist vorgesehen, dass der Aufstellmechanismus derart ausgebildet ist, dass das Deckelelement bei einer Bewegung zwischen zusammengelegter und aufgestellter Position sowohl in Höhenrichtung als auch in Längsrichtung relativ zu dem Basiselement bewegt wird. Bei einer Bewegung zwischen aufgestellter Position und zusammengelegter Position bewegt der Aufstellmechanismus das Deckelelement relativ zu dem Basiselement in Höhenrichtung und in Längsrichtung. Insbesondere ist vorgesehen, dass der Aufstellmechanismus bei der Bewegung zwischen aufgestellter Position und zusammengelegter Position zumindest zeitweise, vorzugsweise während der gesamten Bewegung, das Deckelelement gleichzeitig in Höhenrichtung und in Längsrichtung relativ zu dem Basiselement bewegt. Vorzugsweise ist vorgesehen, dass der Aufstellmechanismus bei der Bewegung zwischen aufgestellter Position und zusammengelegter Position das Deckelelement länger in Höhenrichtung als in Längsrichtung bewegt. Alternativ dazu ist vorgesehen, dass der Aufstellmechanismus bei der Bewegung zwischen aufgestellter Position und zusammengelegter Position das Deckelelement länger in Längsrichtung bewegt als in Höhenrichtung.

Bevorzugt ist vorgesehen, dass der Aufstellmechanismus das Deckelelement in Längsrichtung bei der Bewegung aus der zusammengelegten Position in die aufgestellte Position relativ zu dem Basiselement in Richtung eines vorderen Abschnitts des Basiselements und bei einer Bewegung in die zusammengelegte Position in Richtung des Heckabschnitts bewegt.

Durch die Bewegung zumindest eines Teils des Deckelelements in Längsrichtung wird vorteilhaft gewährleistet, dass die Dachtransporteinheit in der zusammengelegten Position besonders kompakt ist und dadurch auf einem Fahrzeug einen verbesserten Luftwiderstand aufweist, insbesondere wenn kein Transport erfolgt. Gleichzeitig erleichtert die Bewegung in Höhenrichtung und in Längsrichtung es einem Benutzer, die Dachtransporteinheit zwischen der zusammengelegten Position und der aufgestellten Position zu bewegen, insbesondere vom Heck des Fahrzeugs aus. Die Dachtransporteinheit ist folglich leicht zu bedienen.

Vorzugsweise ist vorgesehen, dass das Basiselement als Rahmen, insbesondere als umlaufender Rahmen oder teiloffener Rahmen, ausgebildet ist. Insbesondere ist das Basiselement mit dem Lastenträgersystem, vorzugsweise lösbar, verbunden. Beispielsweise ist das Basiselement verschwenkbar, insbesondere zum Öffnen der Dachträgereinheit zum Beladen, an dem Lastenträgersystem angebracht. Das Lastenträgersystem weist z. B. mindestens eine Lastenträgerplatte auf. Insbesondere begrenzt die Lastenträgerplatte den Innenraum der Dachträgereinheit nach unten, insbesondere in Richtung des Fahrzeugs.

Das Basiselement und/oder das Deckelelement ist/sind zumindest teilweise aus einem Kunststoff hergestellt, insbesondere aus einem glasfaserverstärkten Kunststoff, beispielsweise einem Kunststoff mit mindestens 30 % Glasfaseranteil.

Vorzugsweise weist die Dachtransporteinheit eine Längserstreckung auf, die größer ist als eine Breitenerstreckung der Dachtransporteinheit. Zweckmäßig ist vorgesehen, dass die Dachtransporteinheit eine Breitenerstreckung von mindestens 700 mm, insbesondere von mindestens 800 mm, vorzugsweise von mindestens 1000 mm, bevorzugt von mindestens 1500 mm, vorzugsweise maximal 1650 mm, aufweist, und/oder eine Längserstreckung von mindestens 1300 mm, insbesondere von mindestens 1400 mm, vorzugsweise von mindestens 2500 mm, bevorzugt von mindestens 2800 mm, vorzugsweise von höchstens 3100 mm, aufweist.

Gemäß einer Ausgestaltung der Dachtransporteinheit ist vorgesehen, dass das Deckelelement mindestens einen Grundrahmen aufweist. Der Aufstellmechanismus, insbesondere das Aufstellmodul, ist an dem Grundrahmen befestigt. Durch die Befestigung des Grundrahmens an dem Aufstellmechanismus wird der Grundrahmen bei einer Bewegung zwischen der zusammengelegten Position und der aufgestellten Position von dem Aufstellmechanismus, insbesondere dem Aufstellmodul, sowohl zumindest in Höhenrichtung als auch zumindest in Längsrichtung bewegt. An dem Grundrahmen, insbesondere an einer Oberseite des Grundrahmens, ist mindestens ein Deckteil oder eine Mehrzahl von Deckteilen angeordnet. Das Deckteil oder die Deckteile bilden die äußere Hülle der Dachtransporteinheit und schützen den Innenraum insbesondere vor Umwelteinflüssen. Gemäß einer bevorzugten Ausführungsform ist der Grundrahmen in der aufgestellten Position und/oder in der zusammengelegten Position von außen nicht sichtbar. Insbesondere ist der Grundrahmen nur im geöffneten Zustand der Dachtransporteinheit sichtbar.

Es ist insbesondere vorgesehen, dass der Grundrahmen in der Draufsicht eine im Wesentlichen rechteckige, beispielsweise quadratische, Form aufweist. Vorteilhaft ist es, wenn der Grundrahmen gerundete Ecken aufweist. Der Grundrahmen weist beispielsweise eine Mehrzahl von Rohrelementen, insbesondere mit einem rechteckigen Querschnitt, oder Profilabschnitten, z. B. mit U-förmigem oder rechteckigem Querschnitt, auf. Insbesondere ist der Grundrahmen aus einem Metall hergestellt, z. B. Aluminium oder Stahl. Vorzugsweise ist der Grundrahmen als umlaufend geschlossener Rahmen ausgebildet. Alternativ dazu ist vorgesehen, dass der Grundrahmen zumindest abschnittsweise geöffnet ist, beispielsweise dass der Grundrahmen eine U-Form aufweist. Vorzugsweise ist eine Öffnung eines U-förmigen Grundrahmens an einem vorderen Abschnitt des Grundrahmens angeordnet.

Besonders bevorzugt ist der Grundrahmen aus zwei im Wesentlichen U-förmigen Rohrelementen gebildet, die auf ihren gegenüberliegenden Seiten mit Führungsschienen oder mit Rahmenschienen miteinander verbunden sind. An die Führungsschienen oder die Rahmenschienen sind Aufstellmodule montiert.

Auf dem Grundrahmen ist beispielsweise ein elastisch verformbares Deckteil angeordnet, das die äußere Hülle der Dachtransporteinheit bildet. Das Deckteil ist beispielsweise aus einem Kunststoff ausgebildet. Das Deckteil weist beispielsweise an jeder Seite eine Seitenkante auf, die in dem Bereich, der elastisch verformt wird, mit einer Aussparung versehen ist. In die Aussparung ist ein Einsatzteil eingesetzt, das der elastischen Verformung des Deckteils folgt. Beispielsweise ist das Einsatzteil aus einem Gummi oder einem Silikon oder einem elastisch verformbaren Kunststoff ausgebildet.

In einer vorteilhaften Ausführungsform der Erfindung ist vorgesehen, dass die Dachtransporteinheit mindestens zwei Seitenelemente aufweist. Die Seitenelemente sind insbesondere jeweils schwenkbar an dem Deckelelement angeordnet. Beispielsweise sind die Seitenelemente um einen Winkel zwischen 70° und 100° verschwenkbar, vorzugsweise um einen Winkel von etwa 90°. Insbesondere ist vorgesehen, dass die Seitenelemente schwenkbar um jeweils eine sich in Längsrichtung erstreckende Schwenkachse gehalten sind. Sofern ein Grundrahmen vorhanden ist, sind die Seitenelemente vorzugsweise jeweils schwenkbar an dem Grundrahmen angeordnet. Insbesondere ist vorgesehen, dass die Seitenelemente zwischen das Deckelelement und das Basiselement verschwenkbar sind. Durch die Verschwenkbarkeit ist es möglich, dass die Seitenteile in der zusammengelegten Position des Aufstellmechanismus zwischen das Deckelelement und das Basiselement verschwenkt sind.

Alternativ dazu ist vorgesehen, dass die Seitenelemente schwenkbar an dem Basiselement angeordnet sind. Vorzugsweise sind die Seitenelemente derart an dem Basiselement angeordnet, wie es für die Anordnung am Deckelelement beschrieben wird.

Insbesondere in der aufgestellten Position sind die Seitenelemente durch Verschwenken im Wesentlichen derart anordenbar, dass sie sich in Höhenrichtung im Wesentlichen senkrecht zwischen dem Deckelelement, insbesondere dem Grundrahmen, und dem Basiselement erstrecken. Die Seitenelemente bilden die seitliche Begrenzung des Innenraums der Dachtransporteinheit in der aufgestellten Position. Insbesondere bilden die Seitenelemente einen Teil der äußeren Hülle der Dachtransporteinheit. Beispielsweise weist jedes der Seitenelemente in der aufgestellten Position eine Längserstreckung auf, die maximal so groß ist wie, vorzugsweise kleiner ist als, eine Längserstreckung des Basiselements und/oder eine Längserstreckung des Deckelelements.

Insbesondere ist vorgesehen, dass mindestens eines, vorzugsweise alle, der Seitenelemente mindestens einen Schwenkabschnitt aufweist/aufweisen, mit dem das jeweilige Seitenelement an dem Deckelelement, vorzugsweise an dem Grundrahmen, schwenkbar gehalten ist. Beispielsweise weist der Schwenkabschnitt mindestens ein Gelenk, insbesondere eine Mehrzahl an Gelenken, auf. Beispielsweise ist das Gelenk oder sind die Gelenke als federunterstütztes Scharnier bzw. federunterstützte Scharniere ausgebildet. Die Federn der Scharniere sind beispielsweise derart ausgebildet, dass die Seitenelemente in Richtung einer eingeklappten Endlage, insbesondere in Richtung des Deckelelements, gedrängt werden.

Die Seitenelemente sind vorzugsweise mittels eines Umformverfahrens, z. B. Tiefziehen, hergestellt. Es ist auch vorgesehen, dass die Seitenelemente mittels Spritzgießen oder eines additiven Fertigungsverfahrens, beispielsweise 3D-Druck, hergestellt sind. Die Seitenelemente sind zumindest teilweise aus einem Kunststoff hergestellt, insbesondere aus einem glasfaserverstärkten Kunststoff, beispielsweise einem Kunststoff mit mindestens 30 % Glasfaseranteil.

Um die Seitenelemente in der aufgestellten Position, insbesondere in einer in Richtung des Basiselements verschwenkten Endlage, zu fixieren, ist insbesondere vorgesehen, dass jedes der Seitenelemente mindestens ein Haltemittel, insbesondere eine Mehrzahl an Haltemitteln, aufweist. Vorzugsweise ist das Haltemittel an einem Endabschnitt des jeweiligen Seitenelements angeordnet. Vorteilhaft ist vorgesehen, dass der Endabschnitt dem Schwenkabschnitt des jeweiligen Seitenelements gegenüberliegend, beispielsweise in der aufgestellten Position in Höhenrichtung gegenüberliegend, angeordnet ist. Es ist insbesondere vorgesehen, dass mehrere Haltemittel in Längsrichtung, vorzugsweise gleichmäßig, verteilt angeordnet sind. Insbesondere wirkt jedes Haltemittel in der aufgestellten Position der Dachtransporteinheit mit einem, vorzugsweise an dem Basiselement vorgesehenen, Gegenhaltemittel zusammen. Beispielsweise wirkt das Haltemittel kraft-, form- oder kraftformschlüssig mit dem Gegenhaltemittel zusammen. Die Fixierung eines Seitenelements ist beispielsweise mittels eines Betätigungselements lösbar, so dass die Seitenelemente anschließend in den Innenraum, in Richtung des Deckelelements, verschwenkt werden können. Das Betätigungselement ist beispielsweise als Schieber ausgebildet. Es ist ferner auch vorgesehen, dass das Haltemittel mindestens einen Magneten aufweist.

Insbesondere können die Seitenelemente während oder nachdem der Aufstellmechanismus in die aufgestellte Position verbracht wird bzw. worden ist, in Richtung des Basiselements ausgeschwenkt werden und wieder zurückgeschwenkt werden, während oder bevor der Aufstellmechanismus wieder in die zusammengelegte Position überführt wird.

Insbesondere um ein vorteilhaftes Aufstellen oder Zusammenlegen mittels des Aufstellmechanismus zu gewährleisten, ist gemäß einer weiteren Ausgestaltung vorgesehen, dass die Seitenelemente in Längsrichtung relativ zu dem Deckelelement, vorzugsweise zu dem Grundrahmen, bewegbar gehalten sind. Insbesondere sind die Seitenelemente relativ zu dem Deckelelement gleitend bewegbar gehalten. In einer bevorzugten Ausführungsform sind die Seitenelemente derart gehalten, dass die Seitenelemente bei einer Bewegung des Aufstellmechanismus zwischen der aufgestellten Position und der zusammengelegten Position im Wesentlichen ortsfest, insbesondere in Bezug auf das Basiselement, bleiben. Insbesondere bewegen sich die Seitenelemente bei einer Bewegung des Aufstellmechanismus zwischen der aufgestellten Position und der zusammengelegten Position relativ zu dem Deckelelement. Bei einer Bewegung des Aufstellmechanismus zwischen der aufgestellten Position und der zusammengelegten Position halten insbesondere die Seitenelemente und das Basiselement ihre Position in Längsrichtung zueinander. Vorzugsweise bleibt der Schwenkabschnitt jedes der Seitenelemente bei einer Bewegung zwischen der aufgestellten Position und der zusammengelegten Position in Breitenrichtung ortsfest. Durch diese Ausführung wird vorteilhaft sichergestellt, dass eine Bewegung zumindest eines Teils des Deckelelements in Längsrichtung nicht behindert wird, und dass die Dachtransporteinheit in der zusammengelegten Position sehr kompakt ausgebildet ist.

Gemäß einer Weiterbildung ist vorgesehen, dass die Seitenelemente jeweils an einer Führungsschiene entlang bewegbar gehalten sind. Insbesondere ist die Führungsschiene an dem Deckelelement, vorzugsweise an dem Grundrahmen des Deckelelements, angeordnet. "Bewegbar" bedeutet in diesem Zusammenhang, dass durch die Bewegung die Position eines Seitenelements relativ zu der Führungsschiene verändert wird. Es ist vorzugsweise vorgesehen, dass die Seitenelemente jeweils an einer Laufschiene angeordnet sind, und dass die Laufschiene bewegbar an der Führungsschiene gehalten ist. Vorteilhaft ist jedes der Seitenelemente mit mindestens einem Schwenkabschnitt an der Laufschiene angebracht. Insbesondere ist vorgesehen, dass bei einer Bewegung zwischen zusammengelegter Position und aufgestellter Position sich Führungsschiene und Laufschiene relativ zueinander bewegen. Insbesondere bleibt die Laufschiene bei einer Bewegung im Wesentlichen ortsfest in Bezug auf das Basiselement.

Gemäß einer Weiterbildung ist vorgesehen, dass die Führungsschiene aus zylindrische Schiene ausgebildet ist, und dass jedes Seitenelement mit Gleitlagerbuchsen bewegbar zur Führungsschiene angeordnet ist. Durch die Gleitlagerbuchsen sind die Seitenelemente vorzugsweise entlang der Führungsschiene bewegbar und, insbesondere ohne weiteres Gelenk, um die Führungsschiene schwenkbar. Vorzugsweise ist jedes Seitenelement mit mindestens oder genau zwei, mindestens oder genau drei oder mindestens oder genau vier Gleitlagerbuchsen an der Führungsschiene gelagert. Besonders bevorzugt ist vorgesehen, dass die Gleitlagerbuchsen an einer Laufschiene befestigt ist, und dass die Laufschiene, insbesondere in den Schwenkabschnitten, an den Seitenelementen befestigt sind. Vorzugsweise sind die Führungsschienen mittels Halteelementen, insbesondere zumindest mittelbar, an dem Grundrahmen gehalten. Bevorzugt ist vorgesehen, dass eine Bewegbarkeit eines Seitenteils entlang der Führungsschiene durch das zusammenwirken mindestens einer Gleitlagerbuchse mit mindestens einem Halteelement begrenzt wird.

Um vorteilhaft zu gewährleisten, dass die Seitenelemente, insbesondere nach Lösen des Haltemittels oder der Haltemittel, zwischen das Deckelelement und das Basiselement verschwenkt werden, insbesondere federbelastet verschwenkt werden, weist jedes Seitenelement mindestens oder genau ein oder mindestens oder genau zwei Federplatten auf. Die Federplatten wirken vorzugsweise derart mit den Seitenelementen zusammen, dass die Federplatten die Seitenelemente stets in eine eingeschwenkte Position, insbesondere nämlich zwischen das Basiselement und das Deckelelement eingeschwenkte Position drängt. Ein Ausklappen der Seitenelemente in der aufgestellten Position für eine Verwendung der Dachtransporteinheit erfolgt vorzugsweise gegen eine Federkraft der mindestens einen Federplatte. Jede Federplatte ist vorzugsweise um eine Achse schwenkbar an dem Grundrahmen, z. B. an einem Aufstellmodul, gehalten und weist beispielsweise eine Feder auf. Die Feder ist beispielsweise als Doppelschenkelfeder oder als Spiralfeder ausgebildet. Zwei Federschenkel der Doppelschenkelfeder oder der Spiralfeder stützen sich vorzugsweise derart ab, dass die Seitenelemente stets in den Innenraum zwischen Deckelelement und Basiselement gedrängt werden. Vorzugsweise ist die Doppelschenkelfelder oder die Spiralfeder in der eingeschwenkten Position der Seitenelemente weniger gespannt als in der ausgeschwenkten, betriebsbereiten, Position der Seitenelemente. Insbesondere ist vorgesehen, dass die Federplatten lediglich an den Seitenelementen anliegen, insbesondere um eine geringfügige Bewegung entlang der Führungsachse zu ermöglichen.

Eine weitere Ausführungsform der Dachtransporteinheit weist ferner mindestens ein Heckelement auf. Das Heckelement ist insbesondere an dem Deckelelement angebracht. Vorzugsweise ist das Heckelement bewegbar, beispielsweise schwenkbar, an dem Deckelelement, beispielsweise dem Grundrahmen des Deckelelements, gehalten. Insbesondere ist vorgesehen, dass das Heckelement um einen Winkel zwischen 80°und 100°, insbesondere 90°, verschwenkbar ist. Die Verschwenkbarkeit ermöglicht, dass das Heckelement in der zusammengelegten Position des Aufstellmechanismus zwischen dem Deckelelement und dem Basiselement angeordnet ist. Insbesondere ist vorgesehen, dass ausgehend von der aufgestellten Position zunächst das Heckelement in Richtung des Innenraums verschwenkt wird, anschließend die Seitenelemente in Richtung des Innenraums verschwenkt werden, um abschließend die Dachtransporteinheit in die zusammengelegte Position zu überführen. Ausgehend von der zusammengelegten Position werden nach oder während des Aufstellens zuerst die Seitenelemente in Richtung des Basiselements und abschließend das Heckelement verschwenkt.

Alternativ dazu ist vorgesehen, dass das Heckelement schwenkbar an dem Basiselement angeordnet ist. Vorzugsweise ist das Heckelement derart an dem Basiselement angeordnet, wie es für die Anordnung am Deckelelement beschrieben wird.

Vorzugsweise erstreckt sich das Heckelement in Breitenrichtung. Zweckmäßig ist die Breitenstreckung des Heckelements im Wesentlichen gleich einem Abstand zwischen den zwei Seitenelementen, insbesondere in der aufgestellten Position. Zur Verschwenkung des Heckelements ist beispielsweise mindestens ein Heckelementschwenkabschnitt vorgesehen. Der Heckelementschwenkabschnitt weist mindestens ein Gelenk, vorzugsweise eine Mehrzahl an Gelenken, auf. Insbesondere ist das Gelenk oder sind die Gelenke als federunterstütztes Scharnier bzw. federunterstützte Scharniere ausgebildet.

Das Heckelement ist vorzugsweise mittels eines Umformverfahrens, z. B. Tiefziehen, hergestellt. Es ist auch vorgesehen, dass das Heckelement mittels Spritzgießen oder eines additiven Fertigungsverfahrens, beispielsweise 3D-Druck, hergestellt ist. Das Heckelement ist zumindest teilweise aus einem Kunststoff hergestellt, insbesondere aus einem glasfaserverstärkten Kunststoff, beispielsweise einem Kunststoff mit mindestens 30 % Glasfaseranteil. Vorzugsweise ist das Heckelement aus dem gleichen Material hergestellt wie die Seitenelemente.

Eine weitere Ausführungsform der Erfindung sieht vorteilhaft vor, dass der Aufstellmechanismus, insbesondere jedes Aufstellmodul, mindestens einen ersten Verbindungsabschnitt und einen zweiten Verbindungsabschnitt aufweist. Der erste Verbindungsabschnitt ist in Höhenrichtung oberhalb des zweiten Verbindungsabschnitts angeordnet. Insbesondere ist der Aufstellmechanismus, insbesondere jedes Aufstellmodul, über den ersten Verbindungsabschnitt mit dem Deckelelement und über den zweiten Verbindungsabschnitt mit dem Basiselement verbunden. Zweckmäßig ist vorgesehen, dass der zweite Verbindungsabschnitt relativ zu dem Basiselement fest, nämlich unbewegbar, ist. Beispielsweise ist der zweite Verbindungsabschnitt mit dem Basiselement über Befestigungsmittel, vorzugsweise lösbar, verbunden.

Es ist von Vorteil, wenn der erste Verbindungsabschnitt und/oder der zweite Verbindungsabschnitt als Schiene, vorzugsweise als sich in Längsrichtung erstreckende Schiene, ausgebildet ist, beispielsweise als L-förmige oder als U-förmige Schiene.

Der erste Verbindungsabschnitt und der zweite Verbindungsabschnitt sind über mindestens einen Schenkel miteinander verbunden. Der Schenkel definiert die Bewegbarkeit des ersten Verbindungsabschnitts zum zweiten Bewegungsabschnitt während der Bewegung in die aufgestellte Position oder umgekehrt. Vorzugsweise ist der Schenkel jeweils an dem ersten Verbindungsabschnitt und an dem zweiten Verbindungsabschnitt drehbar gelagert.

Vorzugsweise ist vorgesehen, dass der erste Verbindungsabschnitt und der zweite Verbindungsabschnitt über mindestens zwei Schenkel miteinander verbunden sind. Die Schenkel sind vorzugsweise parallel zueinander angeordnet. Beide Schenkel sind um die gleichen Achsen an dem ersten und zweiten Verbindungsabschnitt drehbar gelagert. Durch die beiden parallel zueinander angeordneten Schenkel wird die Stabilität jedes Aufstellmoduls gesteigert.

Dieses Ausführungsbeispiel wird vorzugsweise dadurch weitergebildet, dass der Aufstellmechanismus, insbesondere jedes Aufstellmodul, mindestens einen Verbinder aufweist, und dass der Verbinder um eine Achse drehbar mit dem Schenkel verbunden ist. Der Schenkel und der Verbinder sind beispielsweise scherenartig miteinander verbunden, so dass sie sich relativ um die Achse zueinander drehen können. Insbesondere um eine Bewegbarkeit des Aufstellmechanismus zu gewährleisten, ist der Verbinder zumindest drehbar an dem ersten Verbindungsabschnitt und an dem zweiten Verbindungsabschnitt gelagert.

Vorzugsweise ist vorgesehen, dass jedes Aufstellmodul mindestens zwei Verbinder aufweist. Die Verbinder sind vorzugsweise parallel zueinander angeordnet. Beide Verbinder sind insbesondere um die gleichen Achsen an dem ersten und zweiten Verbindungsabschnitt drehbar gelagert. Durch die beiden parallel zueinander angeordneten Verbinder wird die Stabilität jedes Aufstellmoduls weiter gesteigert.

In Weiterbildung der Erfindung ist vorgesehen, dass der erste Verbindungsabschnitt mindestens eine Führung aufweist. Insbesondere ist es vorgesehen, dass ein Führungsbolzen in der Führung des ersten Verbindungsabschnitts gelagert, insbesondere gleitend gelagert, ist. Es ist bevorzugt, wenn der Führungsbolzen in der Führung translatorisch bewegbar, insbesondere in Längsrichtung translatorisch, gelagert ist. Vorteilhaft bewegt sich der Führungsbolzen bei einer Bewegung zwischen der aufgestellten Position und der zusammengelegten Position in Längsrichtung entlang der Führung. Das Vorhandensein der Führung ermöglicht eine Bewegung zumindest eines Teils des Deckelelements in Längsrichtung.

Der Führungsbolzen ist insbesondere am Verbinder ausgebildet. Durch den Führungsbolzen wird der Verbinder vorteilhaft am ersten Verbindungsabschnitt geführt. Bei einer Bewegung des Aufstellmechanismus, insbesondere eines Aufstellmoduls, in die aufgestellte Position bewirkt die Bewegung des Führungsbolzens in der Führung, dass die Seitenteile im Wesentlichen ortsfest verbleiben können, also eine Relativbewegung zwischen Führungsbolzen und erstem Verbindungsabschnitt erfolgen kann. Bei Vorhandensein von zwei Verbindern, verbindet der Führungsbolzen auch die Verbinder.

Sind eine Führungsschiene und eine Laufschiene vorhanden, so ist es insbesondere vorgesehen, dass der Führungsbolzen mit der Laufschiene verbunden ist, so dass der Führungsbolzen die Laufschiene bei einer Bewegung in Position hält. Vorzugsweise tritt bei einer Bewegung zwischen der aufgestellten Position und der zusammengelegten Position durch das Zusammenwirken des Führungsbolzens mit der Laufschiene eine Relativbewegung zwischen dem ersten Verbindungsabschnitt und der Laufschiene auf.

Wenn die Führung als längliche Führungsnut ausgeführt ist, wird die Funktionalität des Aufstellmechanismus verbessert. Insbesondere ist vorgesehen, dass der Führungsbolzen einen Durchmesser aufweist, der etwas geringer als die Höhe der Führungsnut ist.

Ferner ist es gemäß einem weiteren Ausführungsbeispiel vorgesehen, dass mindestens ein Führungsstift vorhanden ist, und dass der Führungsstift an dem zweiten Verbindungsabschnitt, insbesondere gleitend, gelagert ist. Vorzugsweise ist der Führungsstift an dem Verbinder bzw. den Verbindern ausgebildet. Der Führungsstift ist vorzugsweise in einer Führungsnut am zweiten Verbindungsabschnitt gelagert. Die Führungsnut am zweiten Verbindungsabschnitt ist länglich ausgebildet und weist insbesondere eine Höhe auf, die etwas größer als der Durchmesser des Führungsstiftes ist. Insbesondere ist der Führungsstift am Verbinder bzw. den Verbindern angeordnet. Bei einer Bewegung gleitet der Führungsstift - wie vorangehend für den Führungsbolzen erläutert - in der Führungsnut am zweiten Verbindungsabschnitt.

Insbesondere bewirkt der Verbinder bzw. die Verbinder, dass der Führungsbolzen und der Führungsstift sich zueinander abgestimmt bewegen, also dass der Führungsbolzen und der Führungsstift durch den Verbinder bzw. die Verbinder bewegungssynchron miteinander verbunden sind.

Um die Relativbewegung zwischen dem Führungsbolzen und dem Führungsstift verbessert aufeinander abzustimmen und den Aufstellmechanismus, insbesondere jedes Aufstellmodul, in Breitenrichtung zu stabilisieren, weist insbesondere der Verbinder mindestens ein Führungsmittel auf. Insbesondere weist das Führungsmittel mindestens einen, vorzugsweise gekrümmten, Schlitz mit mindestens einem in den Schlitz ragenden Zapfen auf. Der Schlitz und der Zapfen wirken vorzugsweise formschlüssig zusammen. Der Zapfen ist insbesondere mit einem Sprengring in dem Schlitz gesichert.

Als besonders vorteilhaft hat sich gemäß einer Ausgestaltung herausgestellt, wenn vorgesehen ist, dass das Führungsmittel zumindest teilweise im oder am Schenkel ausgebildet ist. Insbesondere ist vorgesehen, dass der Schenkel mindestens den einen Schlitz aufweist, und dass der Zapfen an dem Verbinder angeordnet ist. Vorzugsweise sind der Schlitz und der Zapfen beabstandet zu der Achse angeordnet, um die der Schenkel und der Verbinder verschwenken, so dass der Aufstellmechanismus, insbesondere das Aufstellmodul, eine gesteigerte Seitenstabilität erhält. Beispielsweise führt der Zapfen eine Bewegung in Höhenrichtung und in Längsrichtung aus. Insbesondere führt der Schlitz eine Bewegung des Zapfens, wenn der Aufstellmechanismus, insbesondere das Aufstellmodul, eine Bewegung zwischen der aufgestellten Position in die zusammengelegte Position durchführt. Vorteilhaft ist vorgesehen, dass der Schlitz gekrümmt, beispielsweise spline- oder kurvenförmig, ausgebildet ist. Alternativ dazu ist vorgesehen, dass der Zapfen an dem Schenkel angeordnet ist, und dass der Verbinder den Schlitz aufweist.

Bei Vorhandensein von zwei Schenkeln bzw. Verbindern weist vorzugsweise jedes Paar von Verbinder und Schenkel ein Führungsmittel auf.

Gemäß einer weiteren Ausführungsform ist vorgesehen, dass der Aufstellmechanismus, insbesondere mindestens ein Aufstellmodul oder beide Aufstellmodule, mindestens eine Federkomponente aufweist. Die Federkomponente ist insbesondere zwischen dem Deckelelement und dem Basiselement angeordnet. Zweckmäßig ist die Federkomponente in der zusammengelegten Position vorgespannt. Beispielsweise ist die Federkomponente eine Gasdruckfeder. Bevorzugt ist die Federkomponente drehbar in dem Basiselement gelagert. Alternativ oder zusätzlich ist insbesondere vorgesehen, dass die Federkomponente mit dem Schenkel verbunden ist, vorzugsweise drehbar an dem Schenkel gelagert ist. Die Federkomponente unterstützt vorzugsweise eine Bewegung von der zusammengelegten Position in die aufgestellte Position. Dadurch wird das Verlagern des Deckelelements, um die Dachtransporteinheit in einen verwendungsbereiten Zustand zu verbringen, für einen Benutzer vereinfacht.

Beispielsweise ist vorgesehen, dass das die Federkomponente an dem ersten Verbindungsabschnitt und/oder dem zweiten Verbindungsabschnitt verbunden ist. Besonderes bevorzugt ist vorgesehen, dass die Federkomponente an dem zweiten Verbindungsabschnitt gelagert ist, und dass eine Lagerachse der Federkomponente in Bezug auf eine Lagerachse des Schenkels oder der Schenkel versetzt angeordnet ist, insbesondere in Bezug auf eine Höhe H versetzt angeordnet ist. Bei Vorhandensein von zwei Schenkeln und Verbindern an einem Aufstellmodul ist die Federkomponente vorzugsweise zwischen den parallel zueinander angeordneten Schenkeln und Verbindern angeordnet.

In Weiterbildung der Erfindung ist vorgesehen, dass das Deckelelement, insbesondere das mindestens eine Deckteil, bei einer Bewegung zwischen zusammengelegter Position und aufgestellter Position zumindest teilweise elastisch verformt wird. Das Deckelelement wird bei einer Bewegung folglich nicht nur zumindest teilweise in Längsrichtung bewegt, sondern zusätzlich zumindest bereichsweise elastisch verformt. Die elastische Verformung des Deckelelements, insbesondere des Deckteils, ermöglicht, insbesondere im Zusammenspiel mit der Bewegung in Längsrichtung, eine Vergrößerung des Innenraums in der aufgestellten Position.

Vorzugsweise ist vorgesehen, dass die elastische Verformung in einem Bereich in Längsrichtung vor einem Grundrahmen erfolgt. Der Grundrahmen wird durch den Aufstellmechanismus, insbesondere durch das Aufstellmodul oder die Aufstellmodule, zusammen mit dem daran angeordneten Deckteil in Längsrichtung bewegt. Der in Längsrichtung vor dem Grundrahmen liegende Teil des Deckteils wird dabei verformt, beispielsweise bei einer Bewegung in Richtung der aufgestellten Position aufgewölbt. Bei einer Bewegung in entgegengesetzter Richtung wird die Wölbung des Deckelelements, insbesondere des Deckteils, reduziert.

Insbesondere ist vorgesehen, dass das Deckelelement, vorzugsweise das Deckteil, insbesondere in einem vorderen Bereich, schwenkbar mit dem Basiselement verbunden ist. Vorteilhaft ist vorgesehen, dass sich das Deckelelement, insbesondere das Deckteil, ausgehend von einer Verbindungsstelle zwischen dem Basiselement und dem Deckelelement, insbesondere dem Deckteil, in Längsrichtung nach hinten, also in Richtung eines Heckabschnitts, erstreckt. Beispielsweise steht das Deckelelement, insbesondere das Deckteil, im vorderen Bereich schräg von dem Basiselement hervor. Insbesondere ist das Deckelelement neigbar, beispielsweise über ein Gelenk, mit dem Basiselement verbunden. Bei einer Bewegung des Grundrahmens wie vorstehend beschrieben, bewirkt die Befestigung des Deckelelements, insbesondere des mindestens einen Deckteils, am Basiselement, dass das Deckelelement, insbesondere im Bereich des Deckteils vor dem Grundrahmen, beim Aufstellen aufgewölbt wird und beim Zusammenstellen, insbesondere auch durch die Bewegung in Längsrichtung, abgeflacht wird.

Vorzugsweise ist das Deckelelement, insbesondere das Deckteil, in der aufgestellten Position stärker elastisch verformt als in der zusammengelegten Position. Insbesondere ist vorgesehen, dass in der aufgestellten Position der elastisch verformbare Bereich eine größere Neigung, vorzugsweise Krümmung, aufweist als in der zusammengelegten Position.

Bei der Dachtransporteinheit ist insbesondere vorgesehen, dass mindestens ein Verriegelungsmechanismus vorhanden ist, vorzugsweise zwei Verriegelungsmechanismen vorhanden sind. Der Verriegelungsmechanismus hält den Aufstellmechanismus, insbesondere das Aufstellmodul oder beide Aufstellmodule, in der aufgestellten Position und/oder in der zusammengelegten Position arretiert. Vorzugsweise hält der Verriegelungsmechanismus den Aufstellmechanismus nur in der zusammengelegten Position oder nur in der aufgestellten Position arretiert. Es ist vorteilhaft, wenn der Verriegelungsmechanismus mindestens ein Betätigungselement aufweist und wenn eine Arretierung des Verriegelungsmechanismus durch das Betätigungselement lösbar ist. Beispielsweise ist vorgesehen, dass der Verriegelungsmechanismus als formschlüssige Verbindung, insbesondere als Rastverbindung, ausgebildet ist. Insbesondere erfolgt das Verriegeln in der aufgestellten und/oder in der zusammengelegten Position automatisch, insbesondere durch Erreichen der Position.

Alternativ oder zusätzlich ist der Verriegelungsmechanismus derart ausgebildet, dass der Aufstellmechanismus, insbesondere das Aufstellmodul oder beide Aufstellmodule, mechanisch in der aufgestellten und/oder in der zusammengelegten Position blockiert werden kann.

Beispielsweise ist zumindest ein erster Verriegelungsmechanismus vorgesehen, mit dem die Dachtransporteinheit, insbesondere der Grundrahmen oder der Aufstellmechanismus, in der zusammengelegten Position arretierbar ist. Insbesondere ist vorgesehen, dass der Verriegelungsmechanismus eine erste Verriegelungskomponente aufweist, die an dem Deckelelement, insbesondere an dem Grundrahmen, angeordnet ist, und eine zweite Verriegelungskomponente aufweist, die an dem Basiselement angeordnet ist. Die erste Verriegelungskomponente oder die zweite Verriegelungskomponente ist vorzugsweise als Bolzen, beispielsweise als pilzköpfiger Bolzen, ausgebildet und die zweite Verriegelungskomponente oder die erste Verriegelungskomponente ist vorzugsweise als Öffnung, beispielsweise als mit dem Bolzen zusammenwirkende Öffnung, ausgebildet. Der Bolzen greift in der zusammengelegten Position vorzugsweise in die Öffnung ein und wird innerhalb der Öffnung, z. B. formschlüssig, verriegelt. Insbesondere ist ein erstes Betätigungselement vorgesehen, mit dem der erste Verriegelungsmechanismus lösbar ist. Vorteilhaft ist es, wenn das Betätigungselement zumindest in der zusammengelegten Position von außen zugänglich ist. Beispielsweise ist das Betätigungselement an dem Basiselement vorgesehen. Insbesondere ist es vorgesehen, dass das Betätigungselement als Hebel, als Schieber oder als Druckknopf ausgebildet ist.

Alternativ oder zusätzlich dazu ist vorgesehen, dass zumindest ein zweiter Verriegelungsmechanismus vorgesehen ist, mit dem die Dachtransporteinheit, insbesondere der Aufstellmechanismus, in der aufgestellten Position arretierbar ist. Beispielsweise weist der zweite Verriegelungsmechanismus mindestens einen Bolzen auf. Der Bolzen ist beispielsweise an dem Aufstellmodul angeordnet. Insbesondere ist an jedem Aufstellmodul mindestens ein Bolzen angeordnet. Der Bolzen ist vorzugsweise derart federbelastet, dass er stets in eine Freigabeposition gedrängt wird. Der Bolzen ist insbesondere derart angeordnet, dass er von einem in der aufgestellten Position in Richtung des Basiselements verschwenkten Seitenelement in eine Verriegelungsposition gedrängt wird, bei der der Verriegelungsmechanismus ein Verbringen in die zusammengelegte Position blockiert, beispielsweise dadurch, dass der Bolzen formschlüssig in eine Öffnung eingreift. Sobald das Seitenelement in den Innenraum verschwenkt worden ist, wird der Bolzen in seine Freigabeposition gedrängt, so dass der Verriegelungsmechanismus gelöst ist und der Aufstellmechanismus in die zusammengelegte Position überführbar ist.

Vorzugsweise ist vorgesehen, dass die Seitenelemente in der in Richtung des Basiselements verschwenkten Position, in der insbesondere die Bolzen des Verriegelungsmechanismus in die Sperrposition gedrängt werden, fixierbar sind. Die Fixierung kann beispielsweise durch ein Betätigungselement gelöst werden. Das Betätigungselement ist vorzugsweise als Schieber oder als Knopf ausgebildet. Beispielsweise sind separate Betätigungselemente, insbesondere Schieber, für jedes Seitenelement vorgesehen. Insbesondere werden die Seitenelemente automatisch fixiert, wenn sie die in Richtung des Basiselements verschwenkte Endlage erreicht haben.

Bei den vorstehend beschriebenen Betätigungselementen, insbesondere für den ersten Verriegelungsmechanismus oder die Seitenelemente, wird die Betätigung vorzugsweise mit einem mit dem Betätigungselement in Wirkverbindung stehenden Gestänges bewirkt.

Vorzugsweise sind die erste und zweite Verriegelungskomponente für eine Verriegelung in der zusammengelegten Position vorgesehen.

Die Aufgabe wird ferner durch ein Aufstellmodul für einen Aufstellmechanismus für eine Dachtransporteinheit, insbesondere für eine erfindungsgemäße Dachtransporteinheit, gelöst. Das Aufstellmodul ist zumindest zwischen einer aufgestellten Position und einer zusammengelegten Position bewegbar. Ferner weist das Aufstellmodul mindestens einen ersten Verbindungsabschnitt und mindestens einen zweiten Verbindungsabschnitt auf. Das Aufstellmodul bewegt den ersten Verbindungsabschnitt und den zweiten Verbindungsabschnitt in einer Höhenrichtung relativ zueinander, so dass in der aufgestellten Position des Aufstellmoduls der erste Verbindungsabschnitt in Höhenrichtung weiter von dem zweiten Verbindungsabschnitt entfernt ist als in der zusammengelegten Position. Erfindungsgemäß ist vorgesehen, dass das Aufstellmodul den ersten Verbindungsabschnitt bei einer Bewegung zwischen der aufgestellten Position und der zusammengelegten Position auch in einer zu der Höhenrichtung orthogonalen Längsrichtung relativ zu dem zweiten Verbindungsabschnitt bewegt.

Insbesondere ist vorgesehen, dass der erste Verbindungsabschnitt dazu eingerichtet und ausgebildet ist, mit einem Deckelelement der Dachtransporteinheit verbunden zu werden. Alternativ oder zusätzlich ist vorgesehen, dass der zweite Verbindungsabschnitt dazu eingerichtet und ausgebildet ist, mit einem Basiselement einer Dachtransporteinheit verbunden zu werden. Es ist vorzugsweise vorgesehen, dass das Aufstellmodul über den ersten Verbindungsabschnitt mit dem Deckelelement verbunden ist und über den zweiten Verbindungsabschnitt mit dem Basiselement. Beispielsweise ist vorgesehen, dass der erste Verbindungsabschnitt und/oder der zweite Verbindungsabschnitt U-förmig ausgebildet sind/ist.

Vorteilhaft weist das Aufstellmodul eines oder mehrere der vorangehend mit Bezug zu dem Aufstellmechanismus oder Aufstellmodul der Dachtransporteinheit beschriebenen Merkmale und Vorteile auf bzw. ist gemäß einem der beschriebenen Ausführungsbeispiele ausgebildet.

Die Aufgabe wird auch gelöst durch eine weitere gattungsgemäße Dachtransporteinheit, bei der das Deckelelement bewegbar mit dem Basiselement verbunden ist und das Deckelelement, insbesondere das mindestens eine Deckteil eines Deckelelements, bei einer Bewegung zwischen der aufgestellten Position und der zusammengelegten Position zumindest teilweise elastisch verformt wird. Insbesondere ist vorgesehen, dass das Deckelelement, insbesondere das Deckteil, in einem vorderen Bereich bewegbar mit dem Basiselement verbunden ist. Die vorangehend mit Bezug zu einem Deckelelement, insbesondere zu einem zumindest teilweise elastisch verformbaren Deckelelement bzw. Deckteil, beschriebenen Ausführungsformen und Beispiele gelten gleichermaßen für die weitere gattungsgemäße Dachtransporteinheit. Vorzugsweise ist vorgesehen, dass die weitere gattungsgemäße Dachtransporteinheit eines oder mehrere der vorangehend beschriebenen Merkmale aufweist, beispielsweise, aber nicht abschließend, hinsichtlich der Seitenelemente, eines Heckelements oder des Aufstellmechanismus und des Aufstellmoduls bzw. der Aufstellmodule.

Die elastische Verformbarkeit des Deckelelements ermöglicht vorteilhaft die Ausgestaltung einer zusammenlegbaren Dachtransporteinheit, bei der der Innenraum in der aufgestellten Position vergrößert ist.

Weitere vorteilhafte Ausgestaltungen der Erfindung ergeben sich aus der folgenden Figurenbeschreibung und den abhängigen Unteransprüchen.

Es zeigen:
- Fig. 1: eine perspektivische Ansicht eines ersten Ausführungsbeispiels einer Dachtransporteinheit in einer aufgestellten Position,
- Fig. 2: eine perspektivische Ansicht der Dachtransporteinheit in einer zusammengelegten Position,
- Fig. 3: eine perspektivische Ansicht der Dachtransporteinheit in einer aufgestellten Position mit teilweise entferntem Deckteil,
- Fig. 4: eine perspektivische Ansicht der Dachtransporteinheit in einer zusammengelegten Position mit entferntem Deckteil,
- Fig. 5: eine perspektivische Ansicht einer Kombination aus einem Grundrahmen und einem Aufstellmechanismus in einer aufgestellten Position,
- Fig. 6: eine perspektivische Ansicht der Kombination aus Grundrahmen und Aufstellmechanismus in einer zusammengelegten Position,
- Fig. 7: eine perspektivische Ansicht des Aufstellmechanismus in einer aufgestellten Position,
- Fig. 8: eine perspektivische Ansicht des Aufstellmechanismus in einer zusammengelegten Position,
- Fig. 9: eine Draufsicht auf ein Aufstellmodul des Aufstellmechanismus in einer aufgestellten Position,
- Fig. 10: eine Schnittansicht des Aufstellmoduls aus Fig. 9 entlang der Schnittachse X-X,
- Fig. 11: eine Schnittansicht des Aufstellmoduls aus Fig. 9 entlang der Schnittachse XI-XI,
- Fig. 12: einen Ausschnitt eines Schnitts durch eine Dachtransporteinheit im Bereich eines Aufstellmoduls
- Fig. 13: eine perspektivische Ansicht eines weiteren Ausführungsbeispiels Dachtransporteinheit in einer aufgestellten Position,
- Fig. 14: eine perspektivische Ansicht des Aufstellmechanismus gemäß Fig. 13 in einer aufgestellten Position,
- Fig. 15: eine Detailansicht eines Ausführungsbeispiels gemäß Fig. 13,
- Fig. 16: eine Detailansicht eines Aufstellmoduls gemäß Fig. 14, und
- Fig. 17: einen Schnitt durch ein Aufstellmodul gemäß Fig. 14.

In den verschiedenen Figuren der Zeichnung sind gleiche Teile stets mit denselben Bezugszeichen versehen.

Zu der anschließenden Beschreibung wird beansprucht, dass die Erfindung nicht auf das Ausführungsbeispiel und dabei nicht auf alle oder mehrere Merkmale von beschriebenen Merkmalskombinationen beschränkt ist, vielmehr ist jedes einzelne Teilmerkmal des Ausführungsbeispiels auch losgelöst von allen anderen im Zusammenhang damit beschriebenen Teilmerkmalen für sich von Bedeutung für den Gegenstand der Erfindung.

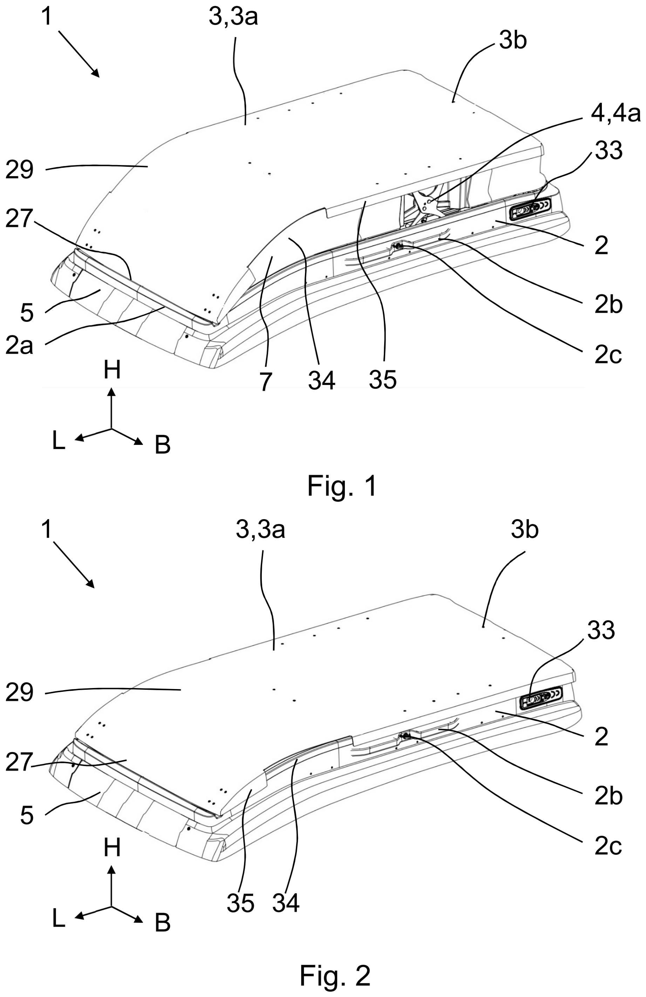

Fig. 1 zeigt eine perspektivische Ansicht einer Dachtransporteinheit 1 für ein Fahrzeug. Die Dachtransporteinheit 1 weist ein Basiselement 2, ein Deckelelement 3 und einen Aufstellmechanismus 4 mit zwei Aufstellmodulen 4a auf. Das Basiselement 2 ist hier mittelbar mit einem Lastenträgersystem 5 an einem Fahrzeug anbringbar. Die Dachtransporteinheit 1 ist so ausgeführt, dass das Deckelelement 3 in einer Höhenrichtung H oberhalb des Basiselementes 2 angeordnet ist. Die Höhenrichtung H erstreckt sich ausgehend von dem Basiselement 2 in Richtung des Deckelelementes 3. Ist die Dachtransporteinheit 1 an einem Fahrzeug angebracht, so fällt die Höhenrichtung H mit einer Richtung von dem Fahrzeugboden in Richtung des Fahrzeugdachs zusammen.

Das Deckelelement 3 und das Basiselement 2 sind über die beiden Aufstellmodule 4a miteinander verbunden. Die beiden Aufstellmodule 4a sind gleich ausgebildet und spiegelverkehrt zu einer Längsrichtung L einander gegenüberliegend angeordnet. Im Folgenden wird daher lediglich ein Aufstellmodul 4a des Aufstellmechanismus 4 beschrieben.

Der Aufstellmechanismus 4 ist zumindest zwischen einer zusammengelegten Position, wie in den Fig. 2, 4, 6 und 8 dargestellt, und einer aufgestellten Position, wie in den Fig. 1, 3, 5, 7 und 9 bis 12 dargestellt, bewegbar. Bei einer Bewegung zwischen der zusammengelegten Position und der aufgestellten Position bewegt der Aufstellmechanismus 4, insbesondere die Aufstellmodule 4a, das Basiselement 2 und das Deckelelement 3 in Höhenrichtung H relativ zueinander, so dass das Deckelelement 3 in der aufgestellten Position des Aufstellmechanismus 4 in der Höhenrichtung H weiter von dem Basiselement 2 entfernt ist als in der zusammengelegten Position. Bei der Bewegung zwischen der zusammengelegten Position und der aufgestellten Position bewegt der Aufstellmechanismus 4 das Deckelelement 3, insbesondere zumindest einen Teil des Deckelelements 3, auch in einer zu der Höhenrichtung H orthogonalen Längsrichtung L relativ zu dem Basiselement 2. Für den Fall, dass die Dachtransporteinheit 1 auf einem Fahrzeug angebracht ist, fällt die Längsrichtung L mit einer Längsrichtung des Fahrzeugs von einem Fahrzeugheck in Richtung einer Fahrzeugfront zusammen. Das Aufstellmodul 4a gemäß Fig. 1 kann in der aufgestellten Position von einem Abdeckelement - nicht dargestellt - abgedeckt werden.

Bei einer Bewegung in die aufgestellte Position wird das Deckelelement 3 zumindest teilweise in Richtung der Front bewegt, bei einer Bewegung in Richtung der zusammengelegten Position wird zumindest ein Teil des Deckelelements 3 in Richtung des Hecks bewegt.

Das Deckelelement 3 weist mindestens oder genau ein Deckteil 3a auf. Das Deckteil 3a ist mit Befestigungsmitteln 3b an einem Grundrahmen 6 befestigt. Das Deckteil 3a bildet nach oben die äußere Hülle der Dachtransporteinheit 1. Das Deckelelement 3 weist eine Längserstreckung in Längsrichtung L auf. In einer Breitenrichtung B weist das Deckelelement 3 eine Breitenerstreckung auf. Die Breitenrichtung B erstreckt sich orthogonal zu der Höhenrichtung H und zu der Längsrichtung L.

Das Basiselement 2 ist in den Figuren 1 bis 4 in einer Ausführungsform dargestellt, bei der das Basiselement 2 mit einem Lastenträgersystem 5 an einem Fahrzeug anbringbar ist. Das Lastenträgersystem 5 ist hier als Lastenträgerplatte ausgebildet, die beispielsweise mit einer Reling eines Fahrzeuges verbindbar ist. Die Lastenträgerplatte ist vorzugsweise ein Teil der Dachtransporteinheit 1. Das Basiselement 2 weist in einem vorderen Abschnitt 2a eine abgeschrägte Form auf. Durch die abgeschrägte Form des vorderen Abschnitts 2a wird der Strömungswiderstand des Basiselementes 2 reduziert, da sich das Basiselement an eine allgemeine Fahrzeugform anlegt.

Das Basiselement 2 weist auf jeder Längsseite einen Griff 2b auf. Mit dem Griff 2b ist die Dachtransporteinheit 1 von der jeweiligen Seite aus öffenbar und schließbar, so dass die Dachtransporteinheit 1 - insbesondere in der geöffneten Position - beladen und entladen werden kann. Das Basiselement 2 weist ferner an jedem Griff 2b einen Schließmechanismus 2c auf. Der Schließmechanismus 2c ermöglicht ein Abschließen der Dachtransporteinheit 1 zur Sicherung des Inhalts.

Der Aufstellmechanismus 4 ist dazu ausgebildet und eingerichtet, sich von der aufgestellten Position in die zusammengelegte Position und umgekehrt zu bewegen. Diese beiden Bewegungen werden nachfolgend als Bewegung zwischen der aufgestellten Position und der zusammengelegten Position beschrieben und zusammengefasst. Eine Bewegung zwischen der aufgestellten Position und der zusammengelegten Position umfasst auch eine teilweise Bewegung zwischen den Extrempunkten der aufgestellten Position und der zusammengelegten Position, also eine Bewegung, die nicht den vollständigen Bewegungsablauf zwischen diesen beiden Extrempunkten abbildet.

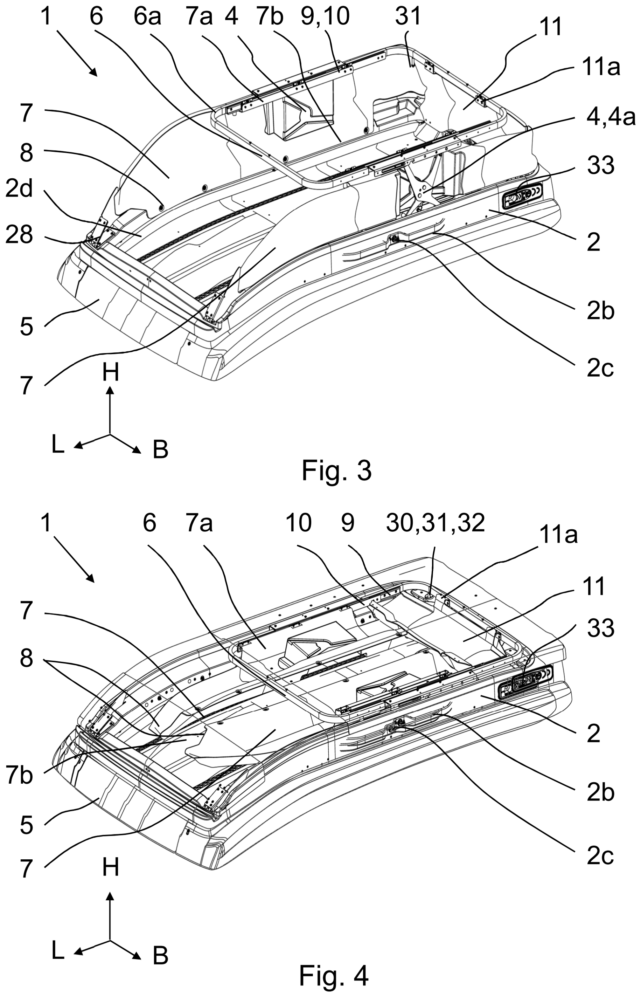

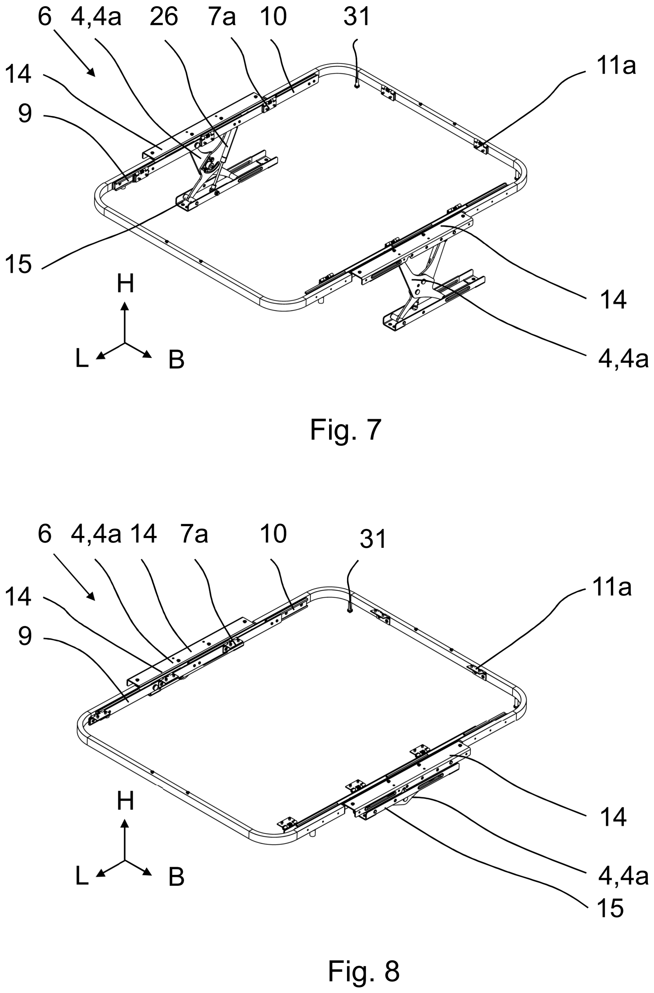

Wie in Fig. 3 und Fig. 7 dargestellt, weist das Deckelelement 3 mindestens einen Grundrahmen 6 auf. Der Aufstellmechanismus 4 ist an dem Grundrahmen 6, insbesondere einer Führungsschiene 9, befestigt. Vorzugsweise ist jedes der Aufstellmodule 4a jeweils an einer Führungsschiene 9 des Grundrahmens 6 befestigt. Gemäß Fig. 3 und Fig. 7 ist der Grundrahmen 6 an der Innenseite eines ersten Verbindungsabschnitts 14 des Aufstellmechanismus 4 befestigt, also an dem innenliegenden Schenkel des im Wesentlichen U-förmigen Verbindungsabschnitts 14. Alternativ dazu ist auch vorgesehen, dass der Grundrahmen 6 an dem außenliegenden Schenkel des Verbindungsabschnitts 14 befestigt ist. Dazu weist der Grundrahmen 6 beispielsweise eine zusätzliche Rahmenschiene - nicht dargestellt - auf. Die Befestigung an dem außen angeordneten Schenkel des Verbindungsabschnitts 14 weist den Vorteil auf, dass keine Kräfte auf die Führungsschiene 9 einwirken können, die möglicherweise deren Funktion beeinflussen können. Der Grundrahmen 6 weist insgesamt eine im Wesentlichen rechteckige, hier quadratische, Form auf. Die Ecken 6a des Grundrahmens 6 sind abgerundet ausgebildet. Ferner ist das Deckteil 3a an dem Grundrahmen 6 befestigt, aber in Fig. 3 nicht dargestellt. Das Basiselement 2 ist als umlaufender Rahmen ausgebildet, wie beispielsweise in Fig. 4 dargestellt.

Das Basiselement 2 ist schwenkbar mit dem Lastenträgersystem 5 verbunden, um die Dachtransporteinheit 1 zum Beladen zu Öffnen oder zu schließen. Zum Verschwenken sind zwischen dem Basiselement 2 und dem Lastenträgersystem an den beiden Längsseiten der Dachtransporteinheit 1 kombinierte Scharnier- und Sperrelemente angeordnet. Damit die Dachtransporteinheit 1 beidseitig zum Be- und Entladen von Ladegut geöffnet werden kann, sind die Scharnier- und Sperrelemente derart ausgebildet, dass sie in Abhängigkeit davon, auf welcher Seite die Dachtransporteinheit 1 von einem Benutzer geöffnet werden soll, entweder zur Ver- und Entriegelung dienen oder als Scharnier. Um die Dachtransporteinheit 1 im geöffneten Zustand zu halten, sind beispielsweise zwei Deckelstützen vorgesehen, die ebenfalls insbesondere ein beidseitiges Öffnen ermöglichen.

Wie in Fig. 3 und 4 dargestellt, weist die Dachtransporteinheit 1 zwei gleich ausgebildete Seitenelemente 7 auf. Die Seitenelemente 7 sind jeweils schwenkbar an dem Deckelelement 3, nämlich an dem Grundrahmen 6 des Deckelelementes 3, gehalten und können um etwa 90° verschwenkt werden. Insbesondere sind die Seitenelemente 7 an einer Laufschiene 10 befestigt. Während Fig. 3 die Dachtransporteinheit 1 in der aufgestellten Position darstellt, stellt Fig. 4 die Dachtransporteinheit 1 in der zusammengelegten Position dar. Zur Verdeutlichung ist sowohl in Fig. 3 als auch in Fig. 4 das Deckteil 3a nicht dargestellt. Aus der Zusammenschau der Figuren 3 und 4 wird ersichtlich, dass die Seitenelemente 7 in der zusammengelegten Position des Aufstellmechanismus 4 zwischen das Deckelelement 3 und das Basiselement 2 verschwenkt sind. In der aufgestellten Position sind die Seitenelemente 7 im Wesentlichen in vertikaler Ausrichtung verschwenkt, so dass sie sich in den jeweiligen Seitenbereichen zwischen dem Deckelelement 3 und dem Basiselement 2 erstrecken.

Gemeinsam mit dem Deckelelement 3, dem Basiselement 2, einem Heckelement 11 und dem Lastenträgersystem 5 umschließen die Seitenelemente 7 einen Innenraum. In dem Innenraum können in der aufgestellten Position (siehe Fig. 3) zu transportierende Lasten verstaut werden. In der zusammengelegten Position sind die Seitenelemente 7 in dem Innenraum angeordnet (siehe Fig. 4). Die Dachtransporteinheit 1 wird insbesondere in den in Fig. 4 angeordneten, zusammengelegten Zustand verbracht, wenn keine Lasten zu transportieren sind, aber die Dachtransporteinheit 1 gleichwohl am Fahrzeug verbleiben soll. Durch die aerodynamische Form wird der Strömungswiderstand reduziert, was im Vergleich zu bekannten Dachboxen deutliche Vorteile bietet.

Jedes der Seitenelemente 7 weist einen Schwenkabschnitt 7a auf. Mit dem Schwenkabschnitt 7a ist das dazugehörige Seitenelement 7 um den Grundrahmen 6 schwenkbar gehalten. Bei der Schwenkbewegung eines der Seitenelemente 7 rotiert der Schwenkabschnitt 7a des Seitenelementes 7 abschnittsweise um den Grundrahmen 6, wie aus der Zusammenschau der Fig. 3 und 4 ersichtlich ist. An einem dem Schwenkabschnitt 7a gegenüberliegenden Endabschnitt 7b des Seitenelementes 7 weist das Seitenelement 7 Haltemittel 8 auf. In dem aufgestellten Zustand wird das jeweilige Seitenelement 7 über die Haltemittel 8 an dem Basiselement 2, insbesondere an einem Innenabschnitt 2d des Basiselementes 2, gehalten. Das Seitenelement 7 weist mehrere Haltemittel 8 auf, die in Längsrichtung L entlang dem Seitenelement 7 verteilt sind. Die Haltemittel 8 halten die Seitenelemente 7 in der aufgestellten Position, so dass diese nicht in den Innenraum zurückschwenken.

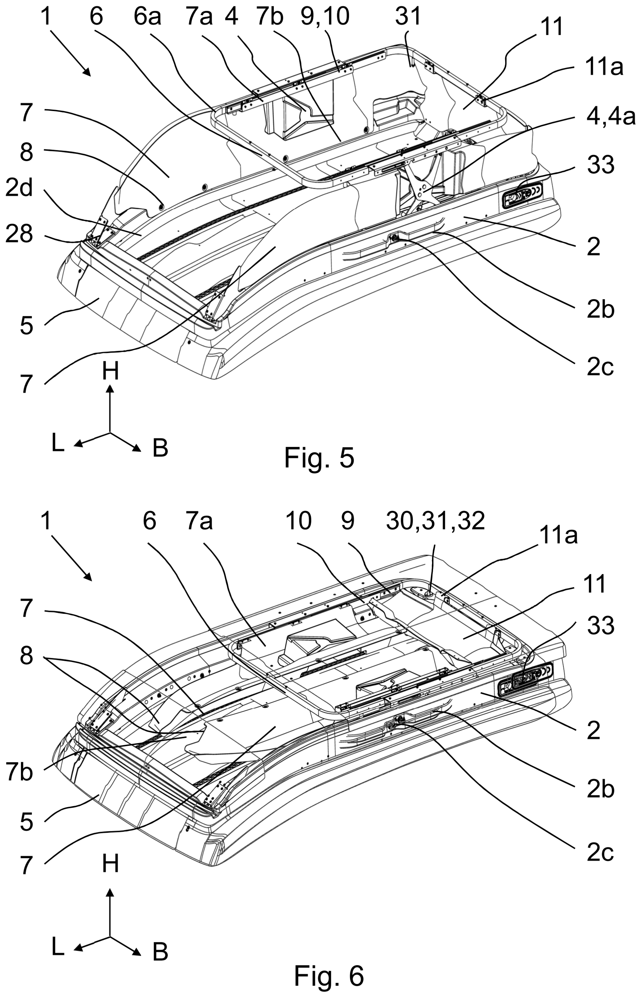

Die Schwenkabschnitte 7a der Seitenelemente 7 weisen Gelenke auf. Jedes Seitenelement 7 der vorliegenden Ausführungsform ist über drei Gelenke mit dem Grundrahmen 6 verbunden. Die Gelenke sind in den Figuren 5 und 6 dargestellt.

Die Seitenelemente 7 sind in der Längsrichtung L relativ zu dem Deckelelement 3, nämlich dem Grundrahmen 6 des Deckelelementes 3, bewegbar gehalten. Bei einer Bewegung des Aufstellmechanismus 4 zwischen der zusammengelegten und der aufgestellten Position bleiben die beiden Seitenelemente 7 im Wesentlichen ortsfest, insbesondere in Bezug auf das Basiselement 2. Eine geringfügige Bewegung von unter 10 mm wird dabei als ortsfest angesehen.

Bei einer Bewegung aus der aufgestellten Position in die zusammengelegte Position bewegen sich die Seitenelemente 7 nicht relativ zu dem Basiselement 2, aber das Deckelelement 3 bewegt sich relativ zu den Seitenelementen 7. Der Grundrahmen 6 und damit das Deckelelement 3 gleitet relativ zu den Seitenelementen 7 in Längsrichtung L. Bei einer Bewegung aus der zusammengelegten Position in die aufgestellte Position gleitet der Grundrahmen 6 in Längsrichtung L in Richtung einer Fahrzeugfront, wenn die Dachtransporteinheit 1 an einem Fahrzeug angebracht ist, während die Seitenelemente 7 mit Bezug zu dem Basiselement 2 ortsfest bleiben.

Fig. 5 stellt eine perspektivische Ansicht des Grundrahmens 6 des Deckelelements 3 mit dem Aufstellmechanismus 4 in der aufgestellten Position dar, und Fig. 6 stellt eine perspektivische Ansicht der Kombination aus dem Grundrahmen 6 des Deckelelements 3 und dem Aufstellmechanismus 4 in der zusammengelegten Position dar. An dem Grundrahmen 6, und damit auch an dem Deckelelement 3, sind Führungsschienen 9 angebracht. An jeder der Führungsschienen 9 ist jeweils eines der Seitenelemente 7 bewegbar gehalten. Im vorliegenden Ausführungsbeispiel ist jedes der Seitenelemente 7 mit seinen Schwenkabschnitten 7a an einer Laufschiene 10 angebracht. Die Laufschiene 10 und die Führungsschiene 9 sind bewegbar zueinander angeordnet. Bei einer Bewegung zwischen der aufgestellten Position und der zusammengelegten Position bewegen sich die Führungsschiene 9 und die Laufschiene 10 relativ zueinander. Die Laufschiene 10 steht dazu mit einem Führungsbolzen 16 des Aufstellmoduls 4a in Verbindung, der die Laufschiene 10 in Position hält, während die Führungsschiene 9 mit zumindest einem Teil des Deckelelements 3 bewegt wird.

In den Figuren 3 und 4 ist dargestellt, dass die Dachtransporteinheit 1 ferner ein Heckelement 11 aufweist. Das Heckelement 11 ist verschwenkbar an dem Deckelelement 3 gehalten. In dem vorliegenden Ausführungsbeispiel weist das Heckelement 11 einen Heckelementschwenkabschnitt 11a auf. Der Heckelementschwenkabschnitt 11a weist eine Mehrzahl an Gelenken auf. Das Heckelement 11 ist schwenkbar an dem Grundrahmen 6 gehalten. Wie aus der Zusammenschau der Figuren 3 und 4 deutlich wird, ist das Heckelement 11 in der zusammengelegten Position des Aufstellmechanismus 4 zwischen dem Deckelelement 3 und dem Basiselement 2 verschwenkt.

Nach einer Bewegung in die aufgestellte Position werden vorzugsweise die Seitenelemente 7 aus dem Innenraum in Richtung des Basiselements 2 verschwenkt und anschließend das Heckelement 11. Bei einer umgekehrten Bewegung wird zuerst das Heckelement 11 in den Innenraum verschwenkt und dort fixiert und anschließend werden die beiden Seitenelemente 7 in den Innenraum verschwenkt und dort fixiert.

Die Figuren 7 und 8 zeigen den Aufstellmechanismus 4, insbesondere die beiden Aufstellmodule 4a, in einer aufgestellten Position (Fig. 7) und in der zusammengelegten Position (Fig. 8). Die Aufstellmodule 4a weisen jeweils einen ersten Verbindungsabschnitt 14 und einen zweiten Verbindungsabschnitt 15 auf. Das Deckelelement 3 ist an dem ersten Verbindungsabschnitt 14 angeordnet. Ferner ist das Basiselement 2 mit dem zweiten Verbindungsabschnitt 15 verbunden. Über den ersten Verbindungsabschnitt 14 ist jedes Aufstellmodul 4a mit dem Deckelelement 3, nämlich mit dem Grundrahmen 6, verbunden. Der erste Verbindungsabschnitt 14 ist hier mit der Führungsschiene 9 verbunden. Wie in Fig. 7 und 8 sowie 10 und 11 dargestellt, ist der erste Verbindungsabschnitt 14 als U-förmige Schiene ausgebildet. Auch der zweite Verbindungsabschnitt 15 ist, wie aus den Figuren 7, 8, 10, 11 und 12 ersichtlich, als U-förmige Schiene ausgebildet.

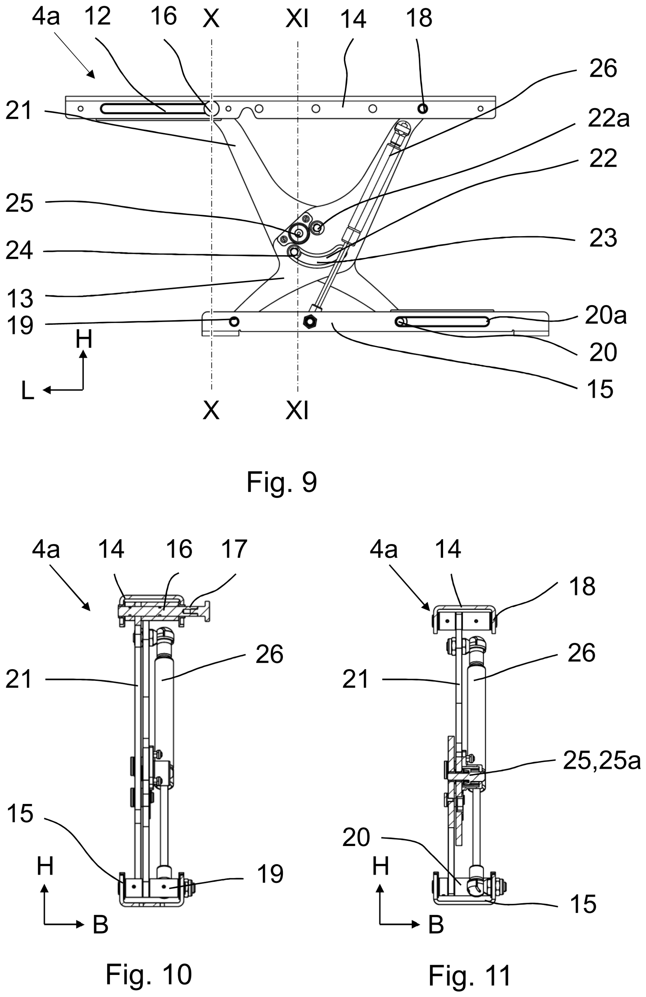

Insbesondere gemäß Fig. 9 sind der erste Verbindungsabschnitt 14 und der zweite Verbindungsabschnitt 15 über einen Schenkel 13 miteinander verbunden. Der Schenkel 13 ist an dem ersten Verbindungsabschnitt 14 und an dem zweiten Verbindungsabschnitt 15 drehbar an einem ersten Lagerpunkt 18 und einem zweiten Lagerpunkt 19 gelagert.

Das Aufstellmodul 4a weist eine Führung 12 auf. Die Führung 12 ist an dem ersten Verbindungsabschnitt 14 vorgesehen. In der Führung 12 ist der Führungsbolzen 16 gelagert, der mit der Laufschiene 10 verbunden ist. Gemäß dem vorliegenden Ausführungsbeispiel ist der Führungsbolzen 16 gleitend in der Führung 12 gelagert. Bei einer Bewegung des Aufstellmoduls 4a zwischen der zusammengelegten Position und der aufgestellten Position erfolgt eine Relativbewegung zwischen dem Deckelelement 3, insbesondere dem Grundrahmen 6, und dem ersten Verbindungsabschnitt 14 und dem Führungsbolzen 16 sowie der Laufschiene 10.

Der Führungsbolzen 16 gleitet bei einer Bewegung zwischen der aufgestellten Position und der zusammengelegten Position in Längsrichtung L entlang der Führung 12. Die Führung 12 ist als sich in Längsrichtung L erstreckende Führungsnut ausgebildet. Auch der Führungsstift 20 gleitet in einer sich in Längsrichtung L erstreckenden Führungsnut, welche an dem zweiten Verbindungsabschnitt 15 vorgesehen ist.

Wie aus Fig. 10 ersichtlich, welche einen Schnitt entlang der Achse X-X durch die Darstellung der Fig. 9 zeigt, ist der Führungsbolzen 16 zweiteilig aufgebaut. Die beiden Teile des Führungsbolzens 16 sind durch ein Gewinde 17 miteinander verbunden.

Der Führungsbolzen 16 ist über einen Verbinder 21 mit einem Führungsstift 20 verbunden, so dass sie im Wesentlichen synchron bewegt werden können. Der Führungsstift 20 ist an dem zweiten Verbindungsabschnitt 15 gleitend, ebenfalls in einer Führungsnut 20a gelagert. Der Schenkel 13 und der Verbinder 21 sind um eine Achse 22a scherenartig verschwenkbar zueinander gehalten. Durch die Anordnung des Schenkels 13 an dem ersten Verbindungsabschnitt 14 und dem zweiten Verbindungsabschnitt 15 wird neben einer Bewegung des Deckelelements 3 in Höhenrichtung auf eine Bewegung in Längsrichtung bewirkt. Dabei ermöglichen die Führung 12 und die Führungsnut 20a, dass die Bewegung des ersten Verbindungsabschnitts 14 zusammen mit einem Teil des Deckelelements 3 in Längsrichtung erfolgen kann.

Fig. 7 und 9 zeigen, dass der Verbinder 21 ein Führungsmittel 22 aufweist. Das Führungsmittel 22 weist einen gekrümmten Schlitz 23 auf, in den ein Zapfen 24 hineinragt. Zapfen 24 und Schlitz 23 wirken formschlüssig zusammen, stabilisieren das Aufstellmodul 4a in Breitenrichtung und begrenzen die Bewegung zwischen aufgestellter und zusammengelegter Position der Dachtransporteinheit 1. Gemäß dem vorliegenden Ausführungsbeispiel ist der Schlitz 23 an dem Schenkel 13 angeordnet. Mit anderen Worten weist der Schenkel 13 den Schlitz 23 auf. Der Zapfen 24 ist an dem Verbinder 21 angeordnet.

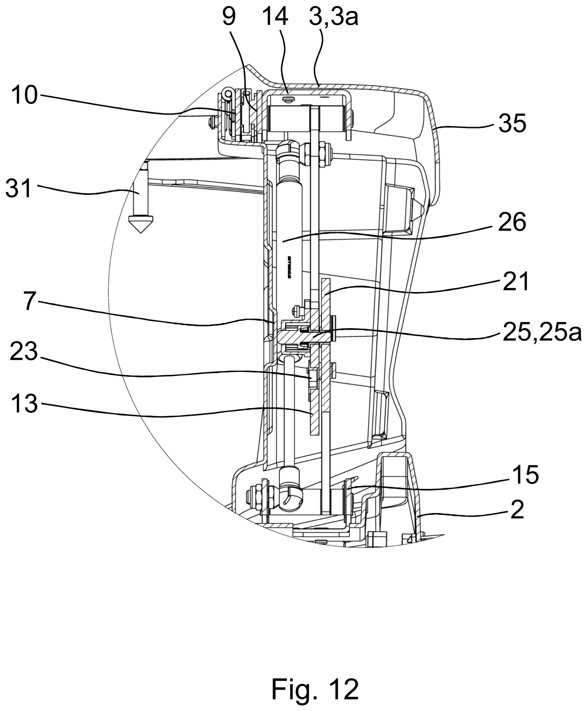

Das Aufstellmodul 4a weist gemäß Fig. 11 und 12 ferner einen zweiten Verriegelungsmechanismus 25 auf, der dazu dient, das Aufstellmodul 4a in der aufgestellten Position formschlüssig zu fixieren. Fig. 11 zeigt den Verriegelungsmechanismus an einem Aufstellmodul 4a, Fig. 12 zeigt einen Ausschnitt eines Schnitts durch den Verriegelungsmechanismus 25 an einer Dachtransporteinheit 1. Der Verriegelungsmechanismus 25 weist einen Bolzen 25a auf, der mit einer Öffnung im Verbinder 21 formschlüssig zusammenwirkt. Durch eine Bewegung aus der Öffnung, gemäß Fig. 11 nach rechts, wird eine Bewegung des Aufstellmoduls 4a, beispielsweise für eine Bewegung in Richtung der zusammengelegten Position, freigegeben. Der Bolzen 25a ist federbelastet und wird stets in eine Freigabeposition gedrängt. Wird das Seitenelement 7 in der aufgestellten Position in Richtung des Basiselements 2 verschwenkt, drückt das Seitenelement 7 in der Endlage den Bolzen 25a, entgegen der Federkraft, in die in Fig. 11 und Fig. 12 dargestellte Sperrposition. Fig. 12 zeigt, wie das Seitenelement 7 in seiner Endlage in der aufgestellten Position den Bolzen 25a in seine Sperrposition drängt.

Solange die Seitenelemente 7 in der aufgestellten Position nach unten verschwenkt sind (siehe Fig. 12), kann kein Überführen in die zusammengelegte Position erfolgen. Erst wenn die Seitenelemente 7 in den Innenraum verschwenkt worden sind (siehe Fig. 6), kann das Aufstellmodul 4a, entgegen der Kraft der Federkomponente 26, in die zusammengelegte Position überführt werden.

Eine Fixierung der Seitenelemente 7 in der in Richtung des Basiselement 2 verschwenkten Endlage kann durch Betätigungselemente 33 - jeweils ein Betätigungselement 33 je Seitenelement 7 - gelöst werden.

Fig. 7 und 9 zeigen, dass das Aufstellmodul 4a ferner eine Federkomponente 26 aufweist. Im vorliegenden Ausführungsbeispiel ist die Federkomponente 26 als Gasdruckfeder ausgebildet. Die Federkomponente 26 ist zwischen dem Deckelelement 3 und dem Basiselement 2 angeordnet. Gemäß dem gezeigten Ausführungsbeispiel ist die Federkomponente 26 mit dem zweiten Verbindungsabschnitt 15 verbunden. Die Federkomponente 26 ist drehbar in dem zweiten Verbindungsabschnitt 15 gelagert. Somit ist die Federkomponente 26 mit dem Basiselement 2 verbunden. Ferner ist die Federkomponente 26 an einem oberen Ende des Schenkels 13 angebracht. Die Federkomponente 26 bewirkt, dass die Dachtransporteinheit 1 mit geringem Kraftaufwand für einen Benutzer in die aufgestellte Position überführt werden kann.

Fig. 1 und 2 zeigen, dass das Deckelelement 3, insbesondere das Deckteil 3a, bei einer Bewegung von der zusammengelegten Position in die ausgestellte Position und umgekehrt, elastisch verformt wird. Die Verformung erfolgt vorzugsweise durch die Bewegung zumindest eines Teils des Deckelelements 3 in Höhenrichtung H als auch in Längsrichtung L Das Deckelelement 3. Vorzugsweise ist das Deckelelement 3 in der aufgestellten Position stärker gewölbt als in der zusammengelegten Position. Das Deckelelement 3, insbesondere das Deckteil 3a, ist in einem vorderen Bereich 27 bewegbar mit dem Basiselement 2 verbunden. Hierzu sind Gelenke 28 an dem Basiselement 2 vorgesehen, wie in Fig. 3 und 4 dargestellt. Die elastische Verformung erfolgt in einem Verformungsbereich 29 in Längsrichtung L vor dem Grundrahmen 6, wie aus der Zusammenschau der Figuren 1 bis 4 ersichtlich ist.

Die elastische Verformung des Deckelelements 3, insbesondere des Deckteils 3a, erfolgt im Wesentlichen sowohl durch die Bewegung in Höhenrichtung H als auch durch die Bewegung des Grundrahmens 6 in Längsrichtung L relativ zu den Gelenken 28 am Basiselement 2. Am Deckelelement 3 ist in den gegenüberliegenden Seitenbereichen eine Aussparung 34 für ein elastisches Einsatzteil - nicht dargestellt - vorgesehen. Das Einsatzteil dichtet im montierten Zustand den Innenraum ab und überbrückt die Aussparung 34 in Seitenflanken 35 des Deckteils 3a.

Fig. 1 und 2 zeigen, dass der Verformungsbereich 29 des Deckelelements 3 in Längsrichtung L vor dem Grundrahmen 6 in der zusammengelegten Position flacher ist als in der aufgestellten Position. Sowohl in der aufgestellten Position als auch in der zusammengelegten Position steht das Deckelelement 3 in Höhenrichtung H entgegen der Längsrichtung L schräg von dem Basiselement 2 ab. Das Deckelelement 3 weist sowohl in der aufgestellten Position als auch in der zusammengelegten Position eine Krümmung auf.

Die Dachtransporteinheit 1 weist ferner einen ersten Verriegelungsmechanismus 30 auf. Der Verriegelungsmechanismus 30 ist als pilzköpfiger Bolzen 31 ausgebildet, der in eine Öffnung 32 eingreift. Fig. 4 stellt den Verriegelungsmechanismus 30 in einer verriegelten Position dar. In den Figuren 3, 5 und 6 ist lediglich der Bolzen 31 dargestellt. Der Verriegelungsmechanismus 30 führt dazu, dass sich das Deckelelement 3 in der verriegelten Position (siehe Fig. 4) nicht von dem Basiselement 2 entfernen kann, also nicht in die aufgestellte Position gemäß Fig. 3 überführt werden kann. Der Verriegelungsmechanismus 30 kann z. B. durch ein - nicht dargestelltes - Betätigungselement in Form eines Knopfes gelöst werden.

Um von der aufgestellten Position gemäß Fig. 1 in die zusammengelegte Position gemäß Fig. 2 zu gelangen, ist vorzugsweise vorgesehen, dass zunächst mittels eines Betätigungselements - nicht dargestellt - eine Fixierung des Heckelements 11 gelöst wird und dieses anschließend unter Wirkung eines federunterstützten Scharniers in den Innenraum in Richtung des Deckelelements 3 verschwenkt wird. Anschließend werden mit jeweils einem als Schieber ausgebildeten Betätigungselement 33 die Haltemittel 8 der Seitenelemente 7 gelöst, so dass diese ebenfalls unter Wirkung eines federunterstützten Scharniers von einem Benutzer in den Innenraum in Richtung des Deckelelements 3 verschwenkt werden können.

Durch das Verschwenken der Seitenelemente 7 sind die Verriegelungsmechanismen 25 gelöst, so dass das Deckelelement 3 von einem Benutzer in Richtung des Basiselements 2 bewegt werden kann, insbesondere bis der erste Verriegelungsmechanismus 30 verriegelt.

Um von der zusammengelegten Position gemäß Fig. 2 in die aufgestellte Position gemäß Fig. 1 zu gelangen, werden die Schritte in umgekehrter Reihenfolge ausgeführt, insbesondere beginnend mit einem Entriegeln des ersten Verriegelungsmechanismus 30.

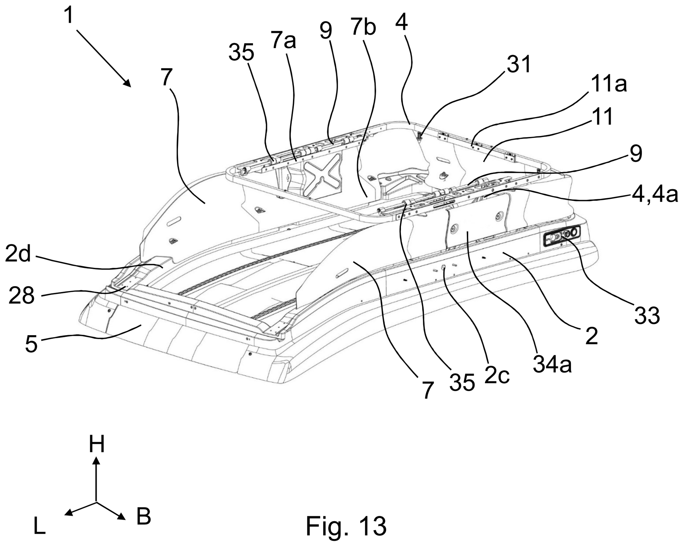

Fig. 13 zeigt eine perspektivische Ansicht eines weiteren Ausführungsbeispiels einer Dachtransporteinheit 1 in einer aufgestellten Position. Dieses Ausführungsbeispiel entspricht im Wesentlichen dem Ausführungsbeispiel der Fig. 1 bis Fig. 6, so dass auf diese Beschreibung Bezug genommen wird und im Wesentlichen auf die Unterschiede eingegangen wird. Die Dachtransporteinheit 1 weist ein Basiselement 2, ein Deckelelement 3 und einen Aufstellmechanismus 4 mit zwei Aufstellmodulen 4a auf. Das Basiselement 2 ist über ein Lastenträgersystem 5 an einem Fahrzeug anbringbar. Das Deckelelement 3 ist in Höhenrichtung H oberhalb des Basiselements 2 angeordnet und über den Aufstellmechanismus 4 mit dem Basiselement 2 verbunden.

Das Basiselement 2 weist einen vorderen Abschnitt 2a mit einer abgeschrägten Form auf, um den Strömungswiderstand zu reduzieren. An jeder Längsseite des Basiselements 2 ist ein Griff 2b - hier nicht dargestellt - mit einem zugehörigen Schließmechanismus 2c vorgesehen. Das Deckelelement 3 umfasst ein Deckteil 3a, das die äußere Hülle der Dachtransporteinheit 1 bildet. Zwei Seitenelemente 7 sind in der aufgestellten Position - wie dargestellt - in Richtung des Basiselements 2 verschwenkt und erstrecken sich im Wesentlichen vertikal zwischen dem Deckelelement 3 und dem Basiselement 2. Die Aufstellmodule 4a sind in Mulden der Seitenelemente 7 angeordnet durch Abdeckelemente 34 abgedeckt.

Das Basiselement 2 weist auf jeder Längsseite einen Griff 2b auf - hier nicht dargestellt. Mit dem Griff 2b ist die Dachtransporteinheit 1 von der jeweiligen Seite aus öffenbar und schließbar, so dass die Dachtransporteinheit 1 - insbesondere in der geöffneten Position - beladen und entladen werden kann. Das Basiselement 2 weist ferner an jedem Griff 2b einen Schließmechanismus 2c auf. Der Schließmechanismus 2c ermöglicht ein Abschließen der Dachtransporteinheit 1 zur Sicherung des Inhalts.

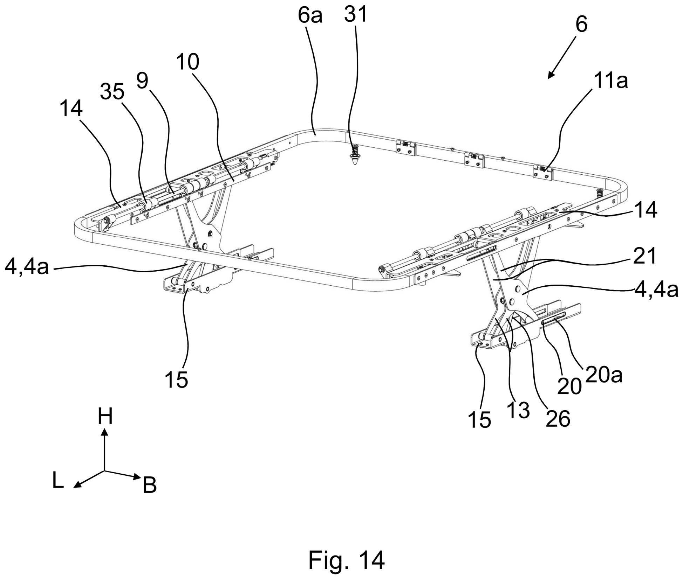

Geringfügige Abweichungen zu den vorangehend beschriebenen Ausführungsbeispielen bestehen im Bereich des Aufstellmechanismus 4 sowie im Bereich der Führung der einklappbaren Seitenelemente 7. Die Führungsschienen 9 und Laufschienen 10 sind in diesem Ausführungsbeispiel anders ausgestaltet, um eine optimierte Bewegung der Seitenelemente 7 relativ zu dem Deckelelement 3 bei einer Bewegung zwischen der zusammengelegten Position und der aufgestellten Position zu ermöglichen, was nachfolgend anhand der Fig. 14, 15, 16 und 17 beschrieben werden wird.

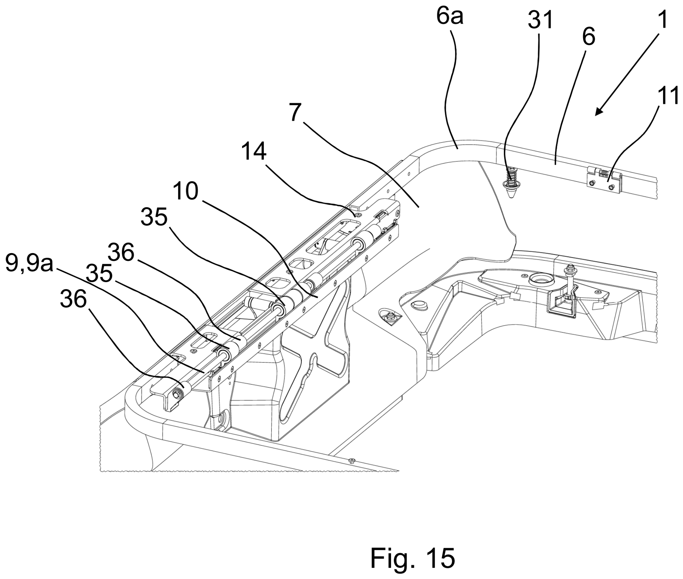

Fig. 14 zeigt eine perspektivische Ansicht des Grundrahmens 6 und des Aufstellmechanismus 4 aus Fig. 13 in einer aufgestellten Position. Fig. 15 zeigt Details der Führungsschiene 9 und der Befestigung der Seitenelemente 7. Das Aufstellen und Zusammenlegen des Aufstellmechanismus 4 mit Grundrahmen 6 erfolgt im Wesentlichen so wie für die voranstehenden Figuren beschrieben, so dass auf diese Beschreibung verwiesen wird. Gemäß Fig. 14 und Fig. 15 sind die Seitenelemente 7 mit ihrem Schwenkabschnitt 7a an einer Laufschiene 10 befestigt, die wiederum mittels Gleitlagerbuchsen 35 auf einer Führungsschiene 9 bewegbar gehalten ist. Dadurch ist gewährleistet, dass die Seitenelemente 7 bei einem Aufstellen und Zusammenlegen im Wesentlichen in ihrer Position in Bezug auf das Basiselement 5 verbleiben. Die Führungsschiene 9 ist zylindrisch ausgebildet und mittels Halteelementen 36 an dem ersten Verbindungsabschnitt 14 befestigt. Beim Aufstellen und Zusammenlegen der Dachtransporteinheit 1 wird im Wesentlichen die Führungsschiene 9 bewegt, während sich die Laufschiene mit den daran gehaltenen Gleitlagerbuchsen 35 auf der gleichen Position verbleibt. Die Bewegbarkeit der Gleitlagerbuchsen 35 relativ zur Führungsschiene 9 wird beispielsweise durch die Länge der Führung 12 und/oder durch mindestens ein Halteelement 36 begrenzt.

Die Verwendung von Gleitlagerbuchsen 35 auf einer zylindrischen Führungsschiene 9 ermöglicht sowohl ein axiales Verschieben der Führungsschiene 9 relativ zum Seitenelement 7 als auch ein Verschwenken des jeweiligen Seitenelements 7 in den Innenraum bzw. aus diesem heraus. In einer ausgeschwenkten Position gemäß Fig. 13 und 15 werden die Seitenelemente 7 durch Haltemittel 8 in Position gehalten. Jedes Aufstellmodul 4a weist vorzugsweise ferner zwei Federplatten 37 auf. Auf jedes Seitenelement 7 wirken zwei Federplatten 37. Die Federplatten 37 dienen dazu, die Seitenelemente 7 nach dem Lösen der Haltemittel 8 in die eingeschwenkte Position in den Innenraum zu drängen. Beim Ausschwenken der Seitenelemente 7 werden diese entgegen einer Federkraft der Federplatten 37 ausgeschwenkt.

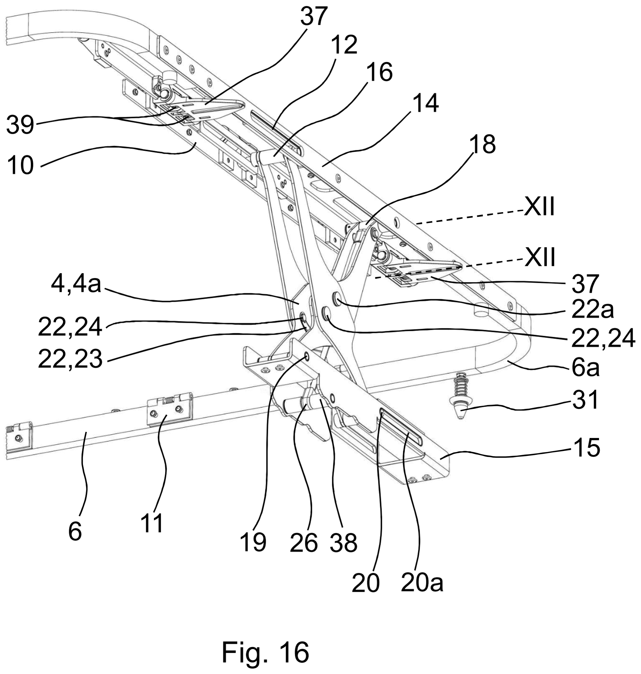

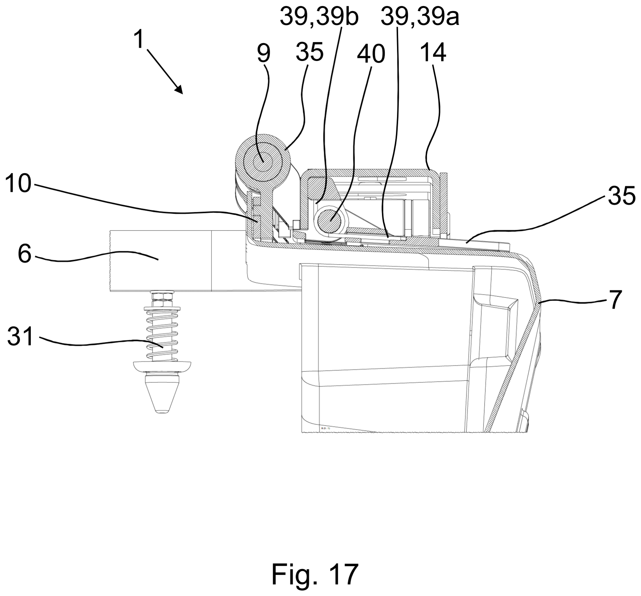

Fig. 17 zeigt einen Schnitt durch eine Federplatte 37 gemäß dem Schnitt XII - XII in Fig. 16. Jede Federplatte 37 weist mindestens eine Feder 39, auf, die als Doppelschenkelfeder ausgebildet und eine Achse 40 umgibt. Alternativ dazu ist auch vorgesehen, dass jede Federplatte zwei Federn 39 aufweist, die parallel zueinander, insbesondere auch der Achse 40, angeordnet sind . Ein erster Federschenkel 39a der Feder 39 stützt sich an der Federplatte 37 und ein zweiter Federschenkel 39b der Feder 39 sich zumindest mittelbar an dem ersten Verbindungsabschnitt 14 abstützt. Ferner stützt sich ein dritter, nicht dargestellter Federschenkel der als Doppelschenkelfeder ausgebildeten Feder 39 ebenfalls an der Federplatte 37 ab. Durch diese Anordnung der Feder 39 kann die Federplatte 37 die Seitenelemente 7 wie beschrieben federbelasten. Das Verschwenken der Seitenelemente 7 erfolgt, wie auch aus Fig. 17 ersichtlich, mittels der Gleitlagerbuchsen 35 um die Führungsschiene 9. Die Gleitlagerbuchsen 35 sind mittels der Laufschiene 10 verbunden und an den Seitenelementen 7 befestigt. Dadurch, dass die Federplatten 37 nur an den Seitenteilen 7 anliegen, kann eine axiale Verschiebung des ersten Verbindungsabschnitts 14 relativ zum Seitenteil 7 erfolgen.

Fig. 16 zeigt eine Detailansicht des Grundrahmens 6 gemäß Fig. 14. Die Federplatten 37 sind in der Position dargestellt, in der die Seitenteile 7 - hier nicht dargestellt - aufgestellt, also verwendungsbereit, sind und die Spannung der Feder 39 am größten ist. Um insbesondere die Stabilität der Aufstellmodule 4a zu steigern, weist jedes Aufstellmodul 4a zwei jeweils parallel zueinander angeordnete Schenkel 13 und Verbinder 21 auf. Die Funktion bleibt dabei wie vorstehend für ein paar aus Verbinder 21 und Schenkel 13 beschrieben, wobei sich die beiden Schenkel 13 und Verbinder 21, insbesondere aufgrund der gemeinsamen Lagerung, jeweils synchron zueinander bewegen. Jedes Paar aus Verbinder 21 und Schenkel 13 weist eine Führung 12 mit Schlitz 23 und Zapfen 24 auf. Die Verbinder 21 und Schenkel 13 sind in dem ersten Verbindungsabschnitt 14 und dem zweiten Verbindungsabschnitt 15 gelagert. Zwischen den beiden Paaren aus Verbinder 21 und Schenkel 13 ist die Federkomponente 26 in Form einer Gasfeder 26 angeordnet. Die Federkomponente 26 ist an einem ersten Ende an den Schenkeln 13 und an einem zweiten Ende an dem zweiten Verbindungsabschnitt 15 gelagert. Eine Lagerachse mit einem Lagerbolzen 38 ist dabei in Höhenrichtung H versetzt, nämlich in Bezug auf den ersten Verbindungsabschnitt 14 tiefer, an dem zweiten Verbindungabschnitt 15 in Bezug auf eine Lagerachse der Schenkel 13 an einem Lagerpunkt 19 angeordnet.

Das Ausführungsbeispiel der Fig. 14 entspricht im Wesentlichen dem in den Figuren 7, 8, 9, 10, 11 und 12 gezeigten Aufstellmechanismus. Im Gegensatz zu dem vorstehend beschriebenen Ausführungsbeispiel weist jedes Aufstellmodul 4a jeweils zwei Schenkel 13 und zwei Verbinder 21 auf, um die Stabilität beim Öffnen und Schließen zu verbessern. Die Schenkel 13 und Verbinder 21 sind jeweils an dem ersten Verbindungsabschnitt 14 und dem zweiten Verbindungsabschnitt 15 drehbar gelagert und scherenartig zueinander verschwenkbar gehalten.

Ferner ist im Unterschied zu dem vorangehend beschriebenen Ausführungsbeispiel lediglich eine runde bzw. zylindrische Führungsschiene 9 vorhanden. Auf der runden Führungsschiene 9 sind Gleitlagerbuchsen angeordnet, die sowohl zum Verschwenken als auch zur Längsführung der verschwenkbaren Seitenelemente 7 dienen. Die Seitenelemente 7 werden nach einer Entriegelung federbelastet in die eingeschwenkte Position verschwenkt.

Der Grundrahmen 6 ist über die Führungsschiene 9 mit dem Aufstellmechanismus 4 verbunden. Die Federkomponente 26 ist zwischen dem ersten Verbindungsabschnitt 14 und dem zweiten Verbindungsabschnitt 15 angeordnet und unterstützt die Bewegung aus der zusammengelegten Position in die aufgestellte Position.

Fig. 15 zeigt eine Detailansicht aus Fig. 14, insbesondere die Führungsschiene 9 mit den darauf angeordneten Gleitlagerbuchsen. Die runde Führungsschiene 9 erstreckt sich in Längsrichtung L und ist an dem Grundrahmen 6 befestigt. Auf der Führungsschiene 9 sind mehrere Gleitlagerbuchsen angeordnet, die eine doppelte Funktion erfüllen. Einerseits ermöglichen die Gleitlagerbuchsen das Verschwenken der Seitenelemente 7 um die Führungsschiene 9, andererseits dienen sie zur Längsführung der Seitenelemente 7 relativ zu dem Deckelelement 3 bei einer Bewegung des Aufstellmechanismus 4 zwischen der zusammengelegten Position und der aufgestellten Position. Die Gleitlagerbuchsen sind derart ausgebildet, dass sie auf der runden Führungsschiene 9 sowohl rotatorisch als auch translatorisch bewegbar sind. Durch diese Anordnung bleiben die Seitenelemente 7 bei einer Bewegung des Aufstellmechanismus 4 im Wesentlichen ortsfest in Bezug auf das Basiselement 2, während sich der Grundrahmen 6 zusammen mit der Führungsschiene 9 in Längsrichtung L bewegt.

Fig. 16 zeigt eine Detailansicht des Aufstellmoduls 4a aus Fig. 14. In dieser Darstellung sind die zwei Schenkel 13 und die zwei Verbinder 21 des Aufstellmoduls 4a sichtbar, die jeweils an dem ersten Verbindungsabschnitt 14 und dem zweiten Verbindungsabschnitt 15 drehbar gelagert sind. Die scherenartige Anordnung der Schenkel 13 und Verbinder 21 ermöglicht die kombinierte Bewegung in Höhenrichtung H und Längsrichtung L bei einer Bewegung zwischen der zusammengelegten Position und der aufgestellten Position. Ferner ist in Fig. 16 eine Feder zur Einschwenkung der Seitenelemente 7 dargestellt, die die Seitenelemente 7 nach einer Entriegelung federbelastet in die eingeschwenkte Position drängt.

Fig. 17 zeigt einen Schnitt durch das Aufstellmodul 4a gemäß Fig. 14, in dem die Feder zum Einschwenken der Seitenelemente 7 im Detail dargestellt ist. Die Feder ist als Doppelschenkelfeder ausgebildet und wirkt auf die Seitenelemente 7 derart, dass diese nach dem Lösen der Haltemittel 8 selbsttätig in Richtung des Deckelelements 3 verschwenkt werden. Die Schnittdarstellung zeigt ferner die Anordnung der Feder im Bereich der Führungsschiene 9 sowie die Verbindung mit den Gleitlagerbuchsen, die sowohl die rotatorische als auch die translatorische Bewegung der Seitenelemente 7 ermöglichen.

Um vorteilhaft zu gewährleisten, dass die Seitenelemente 7, insbesondere nach Lösen des Haltemittels 8 oder der Haltemittel 8, zwischen das Deckelement 3 und das Basiselement 2 verschwenkt werden, insbesondere federbelastet verschwenkt werden, weist jedes Seitenelement 7 mindestens oder genau ein oder mindestens oder genau zwei Federplatten 37 auf. Die Federplatten 37 wirken vorzugsweise derart mit den Seitenelementen 7 zusammen, dass die Federplatten 37 die Seitenelemente 7 stets in eine eingeschwenkte Position, insbesondere nämlich zwischen das Basiselement 2 und das Deckelelement 3 eingeschwenkte Position drängt. Ein Ausklappen der Seitenelemente 7 in der aufgestellten Position für eine Verwendung der Dachtransporteinheit 1 erfolgt vorzugsweise gegen eine Federkraft der mindestens einen Federplatte 37. Jede Federplatte 37 ist vorzugsweise um eine Achse 40 schwenkbar an dem Grundrahmen 6, z. B. an einem Aufstellmodul 4a, gehalten und weist beispielsweise eine Feder 39 auf, die als Doppelschenkelfeder ausgebildet ist. Federschenkel 39a, 39b der Doppelschenkelfeder stützen sich vorzugsweise derart ab, dass die Seitenelemente 7 stets in den Innenraum zwischen Deckelelement 3 und Basiselement 2 gedrängt werden. Vorzugsweise ist die Feder 39 in der eingeschwenkten Position der Seitenelemente weniger gespannt als in der ausgeschwenkten, betriebsbereiten, Position der Seitenelemente 7. Insbesondere ist vorgesehen, dass die Federplatten 37 lediglich an den Seitenelementen 7 anliegen, insbesondere um eine geringfügige Bewegung entlang der Führungsschiene 9 zu ermöglichen.

Die Erfindung ist nicht auf das dargestellte und beschriebene Ausführungsbeispiel beschränkt, sondern umfasst auch alle im Sinne der Erfindung gleichwirkenden Ausführungen. Es wird ausdrücklich betont, dass das Ausführungsbeispiel nicht auf alle Merkmale in Kombination beschränkt ist, vielmehr kann jedes einzelne Teilmerkmal auch losgelöst von allen anderen Teilmerkmalen für sich eine erfinderische Bedeutung haben. Ferner ist die Erfindung bislang auch noch nicht auf die in den Ansprüchen 1 und 15 definierte Merkmalskombination beschränkt, sondern kann auch durch jede beliebige andere Kombination von bestimmten Merkmalen aller insgesamt offenbarten Einzelmerkmale definiert sein. Dies bedeutet, dass grundsätzlich praktisch jedes Einzelmerkmal der Ansprüche 1 und 15 weggelassen beziehungsweise durch mindestens ein an anderer Stelle der Anmeldung offenbartes Einzelmerkmal ersetzt werden kann.

### Bezugszeichenliste

- 1: Dachtransporteinheit
- 2: Basiselement
- 2a: vorderer Abschnitt
- 2b: Griff
- 2c: Schließmechanismus
- 2d: Innenabschnitt
- 3: Deckelelement
- 3a: Deckteil
- 3b: Befestigungsmittel
- 4: Aufstellmechanismus
- 4a: Aufstellmodul
- 5: Lastenträgersystem
- 6: Grundrahmen
- 6a: Ecken
- 7: Seitenelement
- 7a: Schwenkabschnitt
- 7b: Endabschnitt
- 8: Haltemittel
- 9: Führungsschiene
- 10: Laufschiene
- 11: Heckelement
- 11a: Heckelementschwenkabschnitt
- 12: Führung
- 13: Schenkel
- 14: erster Verbindungsabschnitt
- 15: zweiter Verbindungsabschnitt
- 16: Führungsbolzen
- 17: Gewinde
- 18: erster Lagerpunkt
- 19: zweiter Lagerpunkt
- 20: Führungsstift
- 20a: Führungsnut
- 21: Verbinder
- 22: Führungsmittel
- 22a: Achse
- 23: Schlitz
- 24: Zapfen
- 25: zweiter Verriegelungsmechanismus
- 25a: Bolzen
- 26: Federkomponente
- 27: vorderer Bereich
- 28: Gelenk
- 29: Verformungsbereich
- 30: erster Verriegelungsmechanismus
- 31: Bolzen
- 32: Öffnung
- 33: Betätigungselement
- 34: Aussparung
- 34a: Abdeckelement
- 35: Gleitlagerbuchsen
- 36: Halteelement
- 37: Federplatte
- 38: Lagerbolzen
- 39: Feder
- 39a: Federschenkel
- 39b: Federschenkel
- 40: Achse

- B: Breitenrichtung
- H: Höhenrichtung
- L: Längsrichtung

## Patentansprüche

1. Dachtransporteinheit (1) für ein Fahrzeug, aufweisend mindestens ein Basiselement (2), mindestens ein Deckelelement (3) und mindestens einen Aufstellmechanismus (4),
wobei das Basiselement (2) zumindest mittelbar an einem Fahrzeug anbringbar ist,
wobei das Deckelelement (3) in einer Höhenrichtung (H) oberhalb des Basiselements (2) angeordnet ist, wobei das Deckelelement (3) und das Basiselement (2) über den Aufstellmechanismus (4) miteinander verbunden sind, wobei der Aufstellmechanismus (4) zumindest zwischen einer zusammengelegten Position und einer aufgestellten Position bewegbar ist, und wobei der Aufstellmechanismus (4) das Basiselement (2) und das Deckelelement (3) in der Höhenrichtung (H) relativ zueinander bewegt, so dass das Deckelelement (3) in der aufgestellten Position des Aufstellmechanismus (4) in der Höhenrichtung (H) weiter von dem Basiselement (2) entfernt ist als in der zusammengelegten Position,
**dadurch gekennzeichnet, dass**
der Aufstellmechanismus (4) zumindest einen Teil des Deckelelements (3) bei einer Bewegung zwischen zusammengelegter Position und aufgestellter Position auch in einer zur Höhenrichtung (H) orthogonalen Längsrichtung (L) relativ zum Basiselement (2) bewegt.

2. Dachtransporteinheit (1) nach Anspruch 1,
**dadurch gekennzeichnet, dass**
das Deckelelement (3) mindestens einen Grundrahmen (6) aufweist, und dass der Aufstellmechanismus (4) am Grundrahmen (6) befestigt ist.

3. Dachtransporteinheit (1) nach Anspruch 1 oder 2,
**dadurch gekennzeichnet, dass**
mindestens zwei Seitenelemente (7) vorhanden sind, insbesondere dass die Seitenelemente (7) jeweils schwenkbar an dem Deckelelement (3), beispielsweise einem Grundrahmen (6), gehalten sind, bevorzugt dass die Seitenelemente (7) zwischen das Deckelelement (3) und das Basiselement (2) verschwenkbar sind.

4. Dachtransporteinheit (1) nach Anspruch 3,
**dadurch gekennzeichnet, dass**
die Seitenelemente (7) in der Längsrichtung (L) relativ zum Deckelelement (3), insbesondere zum Grundrahmen (6), bewegbar, bevorzugt gleitend bewegbar, gehalten sind, insbesondere derart, dass die zwei Seitenelemente (7) bei einer Bewegung des Aufstellmechanismus (4) zwischen der zusammengelegten Position und der aufgestellten Position im Wesentlichen ortsfest bleiben.

5. Dachtransporteinheit (1) nach Anspruch 3 oder 4,
**dadurch gekennzeichnet, dass**
die Seitenelemente (7) jeweils an einer Führungsschiene (9) entlang bewegbar gehalten sind, und dass die Führungsschiene (9) am Deckelelement (3), insbesondere am Grundrahmen (6), befestigt ist.

6. Dachtransporteinheit (1) nach einem der Ansprüche 1 bis 5,
**dadurch gekennzeichnet, dass**
die Dachtransporteinheit (1) ferner mindestens ein Heckelement (11) aufweist, dass das Heckelement (11) an dem Deckelelement (3) angebracht ist, insbesondere dass das Heckelement (11) bewegbar, vorzugsweise schwenkbar, an dem Deckelelement (3), vorzugsweise am Grundrahmen (6), angeordnet ist.

7. Dachtransporteinheit (1) nach einem der Ansprüche 1 bis 6,
**dadurch gekennzeichnet, dass**
der Aufstellmechanismus (4) mindestens zwei Aufstellmodule (4a) aufweist, insbesondere dass jedes Aufstellmodul (4a) mindestens einen ersten Verbindungsabschnitt (14) und mindestens einen zweiten Verbindungsabschnitt (15) aufweist, dass der erste Verbindungsabschnitt (14) und der zweite Verbindungsabschnitt (15) über mindestens einen Schenkel (13) miteinander verbunden sind, vorzugsweise dass der Schenkel (13) an dem ersten Verbindungsabschnitt (14) und an dem zweiten Verbindungsabschnitt (15) drehbar gelagert ist, insbesondere dass das Deckelelement (3) mit dem ersten Verbindungsabschnitt (14) verbunden ist.

8. Dachtransporteinheit (1) nach Anspruch 7,
**dadurch gekennzeichnet, dass**
das Aufstellmodul (4a) mindestens einen Verbinder (21) aufweist, und dass der Verbinder (21) um eine Achse (22a) drehbar mit dem Schenkel (13) verbunden ist, insbesondere dass der Verbinder (21) zumindest drehbar an dem ersten Verbindungsabschnitt (14) und an dem zweiten Verbindungsabschnitt (15) gelagert ist

9. Dachtransporteinheit (1) nach Anspruch 7 oder 8,
**dadurch gekennzeichnet, dass**
zumindest der erste Verbindungsabschnitt (14) mindestens eine Führung (12) aufweist, dass mindestens ein Führungsbolzen (16) in der Führung (12) insbesondere gleitend, gelagert ist, vorzugsweise dass der Führungsbolzen (16) zumindest mittelbar mit einem Seitenelement (7), insbesondere mit einer Laufschiene (10), verbunden ist, bevorzugt dass der Führungsbolzen (16) an einem Verbinder (21) angeordnet ist.

10. Dachtransporteinheit (1) nach einem der Ansprüche 7 bis 9,
**dadurch gekennzeichnet, dass**
mindestens ein Führungsstift (20) vorhanden ist, und dass der Führungsstift (20) an dem zweiten Verbindungsabschnitt (15), insbesondere gleitend, gelagert ist, insbesondere dass der Führungsstift (20) an einem Verbinder (21) angeordnet ist.

11. Dachtransporteinheit (1) nach einem der Ansprüche 8 bis 10,
**dadurch gekennzeichnet, dass**
der Aufstellmechanismus (4), insbesondere mindestens ein Aufstellmodul (4a), mindestens ein Führungsmittel (22) aufweist, um eine Bewegung zwischen Schenkel (13) und Verbinder (21) zu stabilisieren, insbesondere dass das Führungsmittel (22) mindestens einen, vorzugsweise gekrümmten, Schlitz (23) mit mindestens einem in den Schlitz (23) ragenden Zapfen (24) aufweist.

12. Dachtransporteinheit (1) nach Anspruch 11,
**dadurch gekennzeichnet, dass**
das Führungsmittel (22) zumindest teilweise im Schenkel (13) ausgebildet ist, insbesondere dass der Schenkel (13) einen Schlitz (23) aufweist, und dass der Zapfen (24) an dem Verbinder (21) angeordnet ist, oder dass der Zapfen (24) an dem Schenkel (13) angeordnet ist, und dass der Verbinder (21) den Schlitz (23) aufweist.

13. Dachtransporteinheit (1) nach einem der vorangehenden Ansprüche, **dadurch gekennzeichnet, dass**
der Aufstellmechanismus (4), insbesondere mindestens ein Aufstellmodul (4a), mindestens eine Federkomponente (26), beispielsweise mindestens eine Gasdruckfeder, aufweist, und dass die Federkomponente (26) zwischen dem Deckelelement (3) und dem Basiselement (2) wirkend angeordnet ist.

14. Dachtransporteinheit (1) nach einem der vorangehenden Ansprüche, **dadurch gekennzeichnet, dass**
das Deckelelement (3), insbesondere ein Deckteil (3a), bei einer Bewegung zwischen zusammengelegter Position und aufgestellter Position zumindest teilweise elastisch verformt wird, insbesondere dass die elastische Verformung in einem Verformungsbereich (29) in Längsrichtung (L) vor einem Grundrahmen (6) erfolgt, bevorzugt dass das Deckelelement (3), insbesondere in einem vorderen Bereich (27), schwenkbar mit dem Basiselement (2) verbunden ist.

15. Dachtransporteinheit (1) nach einem der vorangehenden Ansprüche, **dadurch gekennzeichnet, dass**
mindestens ein erster Verriegelungsmechanismus (30) vorhanden ist, und dass mit dem ersten Verriegelungsmechanismus (30) das Deckelelement (3) in der zusammengelegten Position arretierbar ist, insbesondere dass der erste Verriegelungsmechanismus (30) mindestens ein Betätigungselement (33) aufweist, und dass eine Arretierung des ersten Verriegelungsmechanismus (30) durch das Betätigungselement (33) lösbar ist, und/oder.dass mindestens ein zweiter Verriegelungsmechanismus (25) vorhanden ist, und dass zumindest der Aufstellmechanismus (4), insbesondere mindestens ein Aufstellmodul (4a), mit dem zweiten Verriegelungsmechanismus (25) in der aufgestellten Position und/oder in der zusammengelegten Position arretierbar ist, insbesondere dass der zweite Verriegelungsmechanismus (25) durch Verschwenken mindestens eines Seitenelements (7) lösbar ist.
